# EUROPÄISCHE PATENTSCHRIFT

(11) **EP 2 636 607 B1**
(45) Veröffentlichungstag und Bekanntmachung des Hinweises auf die Patenterteilung: **25.03.2015**
(21) Anmeldenummer: 13167679.3
(22) Anmeldetag: 31.03.2010
(51) Int. Cl.: B65D 1/26, B65D 25/36, B29C 51/16

(54) **Kombi-Verpackungsbehälter**
Combined packaging container
Récipient d'emballage combiné

(30) Priorität: 01.04.2009 AT 5202009
(43) Veröffentlichungstag der Anmeldung: 11.09.2013
(62) Teilanmeldung aus: 10712353.1
(73) Patentinhaber: Rundpack AG, 9444 Diepoldsau (CH)
(72) Erfinder: Riethmüller, Steffen, 9443 Widnau (CH)
(74) Vertreter: Burger, Hannes

(56) Entgegenhaltungen:
- EP-A1- 1 785 265
- WO-A1-2006/066036
- WO-A1-2009/130043
- DE-A1- 10 010 225
- DE-U1-202007 016 006
- GB-A- 2 420 267
- US-A- 4 325 905

## Beschreibung

Die Erfindung betrifft einen Kombi-Verpackungsbehälter, wie dieser im Anspruch 1 beschrieben ist.

Die DE 20 2007 016 006 U1 beschreibt einen Kombi-Verpackungsbehälter zum Aufnehmen flüssiger und/oder pastöser Produkte, mit einer inneren Begrenzungsfläche des Behälters bildenden, vorzugsweise becherartigen, Schale und einer eine äußere Begrenzungsfläche der Schale zumindest teilweise abdeckenden Abdeckung aus einem bedruckbaren Material. Die Schale weist einen sich von einer oberen Öffnung in Richtung auf einen Bodenbereich verjüngenden Mantelbereich auf. In einer Umfangsfläche des Bodenbereichs der Schale ist mindestens eine radial nach innen ragende Einbuchtung mit einer nach oben weisenden äußeren Begrenzungsfläche vorgesehen, wobei ein unterer Rand der Abdeckung an die nach oben weisende Begrenzungsfläche des Bodenbereichs anlegbar ist. Damit stützt sich die Abdeckung im Bodenbereich an dieser nach oben weisenden Begrenzungsfläche der becherartigen Schale ab. Die Abdeckung verläuft dabei geradlinig zwischen ihren beiden in Axialrichtung voneinander distanzierten Endbereichen. Zum Stapeln weist die becherartige Innenschale anschließend an die nach oben weisende äußere Begrenzungsfläche einen radial ausgerichteten Abstützbereich auf, welcher die nach innen ragende Einbuchtung hin zum Behältermantel der Schale begrenzt. Die Herstellung der becherartigen Schale und der äußeren Abdeckung aus dem bedruckbaren Material erfolgt getrennt voneinander, wobei erst nach der Herstellung der becherartigen Schale die äußere Abdeckung daran aufgebracht wird. Nachteilige dabei ist, dass durch den getrennten Herstellvorgang von Schale und äußerer Abdeckung die Schale mit relativ hohen Wandstärken gefertigt werden muss, um beim nachfolgenden Fügevorgang mit der äußeren Abdeckung eine ausreichende Festigkeit zu besitzen und nicht beschädigt zu werden.

Aus der DE 81 24 014 U1 ist ein Kunststoffbecher mit einer bedruckbaren, außenliegenden Manschette bekannt geworden, bei der der Becher in seiner Wandung zumindest eine nach innen gerichtete, rundum gehende Vertiefung aufweist. In diese Vertiefung greift ein an die Manschette angeformter Wulst ein. Die äußere Manschette erstreckt sich dabei geradlinig zwischen dem nach innen geformten Wulst und seinem weiteren in Axialrichtung davon distanzierten Endbereich. Die nach innen ragende Vertiefung zur Aufnahme des Wulstes kann je nach deren Lage derselben auch als Stapelschulter zum Ineinanderstapeln gleichartiger Kombi-Verpackungsbehälter dienen. Auch hier erfolgt wiederum ein getrennter Herstellvorgang von Kunststoffbecher und außenliegender Manschette. Das Komplettieren erfolgt durch Ineinanderschieben der beiden Bauteile. Nachteilig dabei ist, dass die Stapelschulter im Zusammenwirken mit dem Behälterboden als weiteres Stapelmittel nicht in allen Anwendungsfällen eine ausreichend sichere Distanzierung der Becher im Becherstapel ermöglichte.

Ein Verfahren zur Herstellung eines konischen Kunststoffbehälters mit einem nach außen abstehenden Öffnungsrand durch Tiefziehen ist aus der DE 33 26 369 C2 bzw. der EP 0 102 522 A1 bekannt geworden. Dabei wird der Kunststoffbehälter durch Tiefziehen einer Kunststofffolie gleichmäßiger Dicke gebildet, wobei der Kunststoffbehälter in der Tiefziehform mit einer Schicht aus einem andersartigen Material verbunden wird, welches jedoch mit dem Kunststoffmaterial nicht verschweißt. Diese Schicht aus dem andersartigen Material wird in Form einer Manschette gebildet, welche vor dem Tiefziehen in der Tiefziehform so angeordnet wird, dass ihre Unter- und Oberkante beim Tiefziehen von der Kunststofffolie eingeschlossen wird. Dabei kann die Folie beim Tiefziehen in dem für den Kontakt mit der Manschette vorgesehenen Bereich auf eine minimale, die Dichtigkeit des herzustellenden Behälters gewährleistende Dicke gezogen werden. Zum Stapeln mehrerer gleichartiger Behälter ist im Bereich seines offenen Endes eine nach außen abstehende Stapelschulter vorgesehen, welche sich im Bereich des offenen Endes an dem nach außen abstehenden Öffnungsrand des weiteren Behälters abstützt. Der Wandabschnitt zwischen der Stapelschulter und dem Öffnungsrand ist dabei gegenkonisch bezüglich des zum Boden hin verlaufenden Wandabschnitts ausgebildet, um so die Stapelbildung zu ermöglichen. Dabei war in eigenen Arbeitsvorgängen einerseits die Stapelschulter vor dem Tiefziehen in die Manschette einzuprägen und andererseits das dem Boden zugewendete untere Ende umzubördeln. Nachteilig dabei ist, dass die Stabilität des Bechers durch die nach außen ragende Stapelschulter und die durch Druckbelastung damit einhergehende Verformung der Manschette reduziert wird.

Aus der DE 31 20 075 A1 ist ein weiteres Verfahren sowie ein nach diesem Verfahren hergestellter Behälter bekannt geworden. Dabei wird vor dem Tiefziehen ein Papierbehälter bestehend aus Behälterwand und Behälterboden in die Tiefziehform eingelegt, wobei dessen Form mindestens angenähert der Außenform des herzustellenden Kombi - Verpackungsbehälters entspricht. In diesen vorgefertigten Papierbehälter wird während dem Tiefziehen der aus Kunststoff bestehende und daraus zu formende Teil des Behälters hinein verformt, wobei sich dieser beim Tiefziehen fest an die innere Oberfläche des Papierbehälters anschmiegt und sich dabei mit diesem verbindet. Um ein gegenseitiges Verklemmen von gleichartig ineinander gestapelten Kombi - Verpackungsbehältern zu vermeiden, ist im Bereich des offenen Endes an der Behälterwand eine Stapelschulter ausgebildet. Diese ist stufenförmig sowie umlaufend nach außen vorspringend ausgebildet. Sind mehrere gleichartige Kombi - Verpackungsbehälter ineinander gestapelt, so stützt sich die nach außen vorspringende Stapelschulter an dem diesen Kombi - Verpackungsbehälter aufnehmenden Behälter an dessen oberen Öffnungsrand ab. Nachteilig dabei ist die Ausbildung der Stapelhilfen sowie dass der gesamte äußere Behälter, insbesondere der Behälterboden aus einem Papier- bzw. Kartonmaterial besteht. Bei Kontakt des Kartonmaterials mit Feuchtigkeit kann dies zu einer Beschädigung oder Zerstörung des Bechers führen.

Aus der CH 693 611 A5 ist ein weiterer konischer Kombi - Verpackungsbehälter bekannt geworden, der einen bis zu seinem Bodenrand verlaufenden Mantelteil aus einem Kartonmaterial aufweist. Der Bodenrand weist zur Bildung eines ringförmig umlaufenden Behälterfußes eine Umfalzung auf. Durch Tiefziehen wird ein Innenbehälter aus Kunststoff in den aus dem Kartonmaterial gebildeten Mantelteil hineinverformt, wobei der Innenbehälter einen Teil der Umfalzung des Mantelteils überdeckt, wobei durch eine Profilierung in diesem Abschnitt eine formschlüssige Verbindung zwischen den beiden Behälterteilen geschaffen wird. Im Bereich seines oberen offenen Endes ist am Behältermantel wiederum eine Stapelschulter ausgebildet, sodass mehrere gleich geformte Behälter locker ineinander stapelbar sind. Auch ist hier wiederum die Behälterwand gegenkonisch bezüglich des weiteren Wandabschnitts ausgebildet, wodurch die Abstützung der Stapelschulter an dem flanschartig abstehenden oberen Rand des weiteren Bechers ermöglicht wird. Durch die Ausbildung der Stapelschulter und den gegenkonischen Wandabschnitt wird wiederum die Stabilität des gesamten Kombi - Verpackungsbehälters herabgesetzt.Aus der WO 98/13270 A1 ist ein anderes Verfahren zum Herstellen eines becherförmigen Kombi - Verpackungsbehälters, umfassend ein Kunststoffinnenteil und ein Außenteil sowie ein nach dem Verfahren hergestellter Kombi - Verpackungsbehälter bekannt geworden. Dabei werden der aus Kunststoff gefertigte becherförmige Innenteil und das den Kunststoffinnenteil außen umgebende mantelartige Außenteil getrennt voneinander hergestellt. Zur Bildung des Kombi - Verpackungsbehälters wird das mantelartige Außenteil über das fertig ausgeformte, becherförmige Kunststoffinnenteil geschoben und anschließend am becherförmigen Kunststoffinnenteil fixiert. Dazu sind am Kunststoffinnenteil Einrastmittel vorgesehen, in welche das mantelartige Außenteil zur Fixierung am becherförmigen Kunststoffinnenteil lösbar einrastet. Dabei ist ein erstes Einrastmittel im Bodenbereich des becherförmigen Kunststoffinnenteils durch eine dort angeordnete umlaufende Schulter gebildet, deren Außendurchmesser größer ist als der Innendurchmesser der unteren Kante des mantelartigen Außenteils. Beim Darüberschieben wird das mantelartige Außenteil mit seiner Unterkante so weit über die umlaufende Schulter geschoben, dass es hinter der Schulter einrastet. Ein weiteres Einrastmittel ist durch den oberen nach außen vorstehenden Rand des becherförmigen Kunststoffinnenteils gebildet. Dabei wird das mantelartige Außenteil beim Drüberschieben mit seiner Oberkante so weit in Richtung des umlaufenden Randes geschoben, bis es daran anstößt und nach dem Einrasten zwischen dem Rand und der umlaufenden Schulter gehalten wird. Durch das getrennte Herstellen der beiden Bauteile vor dem Ineinanderfügen, ist es einfach möglich, Stapelhilfen bzw. Stapelmittel im Bereich des Bodens des Bechers anzuordnen, um so wiederum mehrere gleichartige Kombi - Verpackungsbehälter ineinander stapeln zu können, ohne dass diese gegeneinander verklemmen.

Die DE 195 09 100 A1 beschreibt einen zweiteiligen Verpackungsbehälter umfassend einen Kunststoffbecher und eine diesen umgebende Kartonhülse, wobei diese nach deren getrennten Fertigung zusammengefügt werden. Die Kartonhülse ist aus einem Kartonzuschnitt mit einer Überlappungsnaht geformt und verjüngt sich nach unten hin. Weiters liegt die Kartonhülse eng an dem Kunststoffbecher an, sodass die Kartonhülse die Becherwände des Kunststoffbechers formstabilisiert. Ein unterer Rand der Kartonhülse schließt mit dem Boden des Kunststoffbechers ab oder ragt von einer Außenfläche des Bodens beabstandet, über diesen in Richtung der Längsachse des Verpackungsbehälters hinaus. Der untere Rand der Kartonhülse ist durch nach innen umgeknickte Falze verstärkt. Zur Aufnahme der umgeknickten Falze ist im Behältermantel des Kunststoffbechers in einem unmittelbaren Übergangsbereich, ausgehend vom Boden, ein bezüglich dem Behältermantel nach innen versetzter Wandabschnitt zur Ausbildung eines Aufnahmeraums eingeformt. Weiters können am Fußende - also im Bereich des Bodens des Kunststoffbechers - eingeformte Nocken zur Erzielung eines Stapelabstandes zwischen ineinander gestapelten Kunststoffbechern angeordnet sein. Dadurch können die von der Kartonhülse getrennten Kunststoffbecher lösbar aufeinander gestapelt werden, ohne zusammen zu hängen oder zusammen zu kleben.

Aus der DE 20 2004 015 374 U1 ist ein Behälter für Lebensmittel, wie Molkereiprodukte und dergleichen bekannt geworden, der einen Becher sowie eine Manschette aufweist. Der Becher seinerseits weist eine Bodenfläche und einen Mantelabschnitt auf. Die Manschette umgibt zumindest einen Teil des Mantelabschnitts des Bechers. In seinem offenen Endbereich weist der Becher eine abgesetzte Stufe auf, welche als Anschlag für die Manschette dient. Unterhalb dieser Stufe sind im Bereich seines Mantelabschnitts auf der Außenseite mehrere Profilierungen ausgebildet, die als Haltenocken für die Manschette dienen. Der Mantelabschnitt des Bechers ist konisch verjüngend vom offenen Ende hin zum Boden ausgebildet, wobei hingegen die Manschette eine zylindrische Form aufweist und so der Manschettenzuschnitt im abgewickelten Zustand eine im Wesentlichen rechteckige Form besitzt. Zum Ausgleich zwischen der zylinderförmigen Manschette und dem konisch verjüngenden Mantelabschnitt ist die Manschette im Bereich des Bodens umgebördelt und bildet einen größeren Wulst aus.

Die DE 295 01 247 U1 beschreibt eine Kombinationsverpackung aus mehreren Werkstoffen, die vorzugsweise aus Kunststoff und Papier gewählt sind. Die Kombinationsverpackung umfasst eine stapelfähige, einsteckbare Dose, welche sich in einem gewickelten Zylinder, vorzugsweise aus Papier, befindet. Dieser Zylinder ist im Bereich des Bodens mit einer Bördelung versehen und stützt sich am Mantel der innen liegenden Dose ab. In seinem offenen Endbereich weist die einsteckbare Dose einen besonders ausgeformten oberen Rand auf, der zur Versiegelung mit einer Siegelscheibe dient. Weiters ist die Kombinationsverpackung mit einem vorzugsweise wieder verschließbaren Deckel aus Kunststoff versehen. Die Bördelung stützt sich an der glatten Außenwand des nach innen versetzten Mantelabschnitts der einsteckbaren Dose ab.

Aus der EP 0 408 515 A1 ist ein Verpackungsbehälter für die getrennte Abfallverwertung des Kunststoff- und Kartonanteils eines gebrauchten Verpackungsbehälters bekannt geworden. Dabei hat die die Umfangswand verstärkende und nur formschlüssig mit dem Kunststoffbecher verbundene Kartonmanschette einen Soll-Trennstreifen, wobei nach dessen Betätigung sich dieser vom Kunststoffbecher ablösen lässt. Der Soll-Trennstreifen ist am Überlappungsbereich der Kartonmanschette gebildet. Dieser weist nur eine ihn auf einer Seite begrenzende, durch die Überlappung verdeckte Schwächungslinie auf. Beim Aufreißen wirkt die innere Überdeckungskante als Schneidkante für die äußere Überlappungsschicht.

Aus der WO 2006/066036 A1 ist ein Verpackungsbehälter gemäß dem Oberbegriff des Anspruchs 1 bekannt.

Der vorliegenden Erfindung liegt die Aufgabe zugrunde, mit geringstem Aufwand an Material einen tragfähigen Kombi-Verpackungsbehälter mit Stapelhilfen in seinem Bodenbereich zu schaffen.

Eine Aufgabe der vorliegenden Erfindung wird dadurch gelöst, dass der Kombi-Verpackungsbehälter in einem Abschnitt der Behälterwand des Bodenbereichs zumindest eine in Richtung auf die Längsachse vorragende Einschnürung aufweist, wobei die Einschnürung sowohl am Außenteil als auch am Behältermantel ausgebildet ist und die Einschnürung einen Knick in der Behälterwand ausbildet, mit welchem die Behälterwand in Richtung auf die Längsachse hin versetzt ist, und dass die Einschnürung eines der Stützmittel bildet und sich zwischen der Einschnürung und den beiden Endbereichen jeweils ein erster sowie weiterer Wandabschnitt ausbildet, und dass der Innenbehälter, insbesondere dessen Behältermantel, an einer Innenseite des manschettenförmigen Außenteils teilweise anliegend angeformt ist.

Die sich aus der Merkmalskombination des Anspruches 1 ergebenden Vorteile liegen darin, dass so mit einer über die gesamte Höhe des Kombi-Verpackungsbehälters durchgehenden äußeren tragfähigen Umhüllung in Form des Außenteils das Auslangen gefunden werden kann und dieses mit Ausnahme der gegebenenfalls vorgesehenen Überlappungsnaht durchgehend einlagig ausgebildet ist. Weiters wird durch die Einschnürung auch auf der dem Innenraum des Kombi-Verpackungsbehälters zugewendeten Seite das Stapelmittel zum Zusammenwirken mit der Stirnseite des Außenteils geschaffen. Durch diese Einschnürung wird der Querschnitt in einer senkrecht zur Längsachse ausgerichteten Ebene nur soweit eingeengt, dass eine optimal Auflage der Stirnseite des Außenteils an dieser erfolgen kann, jedoch die Stabilität weiter erhalten bleibt. Durch den Inline-Prozess wird eine optimale Verformung beider Bauteile bei deren Herstellung erzielt.

Möglich ist aber auch eine Ausbildung nach Anspruch 2. Dadurch, dass die Stirnseite des Außenteils im Bodenbereich auch gleichzeitig eine Aufstandsfläche für den gesamten Kombi-Verpackungsbehälter bildet, kommt dem aus dem zumeist aus einem Kunststoffmaterial hergestellten Innenbehälter nur mehr eine Dichtfunktion zur Aufnahme der darin bevorrateten Speisen bzw. Getränke zu. Die gesamte Stabilität wird durch das manschettenförmige Außenteil erzielt. So kann ausgehend vom Flansch und der dort unmittelbar benachbart angeordneten Stirnseite des Außenteils die abzutragende Last direkt bis hin zur Aufstandsfläche weitergeleitet werden.

Eine weitere vorteilhafte Ausbildung ist im Anspruch 3 beschrieben, weil dadurch eine definierte Abstützfläche zur Bildung des Stützmittels geschaffen wird.

Möglich ist aber auch eine Ausbildung nach Anspruch 4, da dadurch einerseits mit geringen Wandstärken beider Bauteile das Auslangen gefunden werden kann und trotzdem eine einwandfreie Stapelung von mehreren Kombi-Verpackungsbehältern ineinander ermöglich wird, ohne dass sich diese gegenseitig verklemmen.

Eine weitere vorteilhafte Ausbildung ist im Anspruch 5 beschrieben, da dadurch trotz offener Schnittkante des Außenteils an der die Aufstandsfläche bildenden Stirnseite die Feuchtigkeitsaufnahme durch die Verdichtung wesentlich verringert bzw. überhaupt vermieden werden kann. Dadurch wird nicht nur eine einfache Herstellung des Zuschnitts sondern auch die nachfolgende Aufrichtung des Außenteils erleichtert. So können im Bereich der Anlage zur Herstellung des Kombi-Verpackungsbehälters zusätzliche Umformwerkzeuge, wie diese für die Bildung der Umfalzung notwendig sind, eingespart werden.

Möglich ist auch eine Ausbildung nach Anspruch 6, da dadurch eine unverformte Werbefläche zur Verfügung gestellt werden kann. Darüber hinaus werden aber auch sämtliche Knicke vermieden, welche zu einer Stabilitätsminderung führen würden.

Es ist aber auch eine Ausbildung nach Anspruch 7 von Vorteil, wodurch das Ineinanderstapeln einer Vielzahl von Kombi-Verpackungsbehältern ermöglicht wird.

Nach einer vorteilhaften Weitebildung, wie sie im Anspruch 8 beschrieben ist, wird auch hier eine verzerrungsfreie Werbefläche zur Verfügung gestellt, welche darüber hinaus auch noch eine ausreichende Eigensteifigkeit aufweist.

Von Vorteil ist auch eine Weiterbildung nach Anspruch 9, da dadurch das Außenmaß zur Bildung des Stapels bzw. Stützmittels im untersten Bodenbereich einfach festgelegt werden kann.

Eine vorteilhafte Weiterbildung beschreibt Anspruch 10, da so eine nahezu geradlinige Einbringung der Stapelkräfte in das mantelförmige Außenteil erfolgen kann.

Von Vorteil ist aber auch eine Ausbildung nach Anspruch 11, weil dadurch die Stapelhöhe von ineinander gestapelten Kombi-Verpackungsbehältern sehr gering gehalten werden kann.

Entsprechend einer vorteilhaften Weiterbildung gemäß den Merkmalen nach Anspruch 12 wird eine exakt definierte Abstützung zwischen ineinander gestapelten Kombi-Verpackungsbehälter erzielt.

Vorteilhaft ist aber auch eine Ausbildung nach Anspruch 13, da so gerade bei Werkstoffen, welche einem vergrößerten Schrumpf unterworfen sind, eine Abstützung des Außenteils am Behältermantel des Innenbehälters ermöglicht wird. Durch diese gegenseitige Abstützung wird auch in dem dem offenen Ende des Kombi-Verpackungsbehälters zugewendeten Abschnitt zwischen dem Außenteil und dem Innenbehälter ein Spiel vermieden, sodass ein verbesserter Sitz des Außenteils am Innenbehälter möglich ist.

Von Vorteil ist aber auch eine Ausbildung nach Anspruch 14, da so besser auf das Schrumpfverhalten zwischen dem Innenbehälter und der Rückverformung des Außenteils bedacht genommen werden kann.

Nach einer vorteilhaften Weiterbildung, wie diese im Anspruch 15 beschrieben ist, wird im Axialschnitt gesehen im Außenteil eine nahezu geradlinige Ausbildung erreicht. So ist es auch hier möglich, eine Anlage des Außenteils in seinem oberen Endbereich an der Außenwand des Innenbehälters zu ermöglichen. Weiters kann dadurch aber auch ein hohes Ausmaß der Lastabtragung in Axialrichtung durch das Außenteil erzielt werden.

Zum besseren Verständnis der Erfindung wird diese anhand der nachfolgenden Figuren näher erläutert.

Es zeigen jeweils in stark schematisch vereinfachter Darstellung:
- Fig. 1: ein Teilbereich einer Tiefziehform zur Bildung des Kombi-Verpackungsbehälters, in Ansicht geschnitten;
- Fig. 2: einen vergrößerten Teilabschnitt der Tiefziehform nach Fig. 1;
- Fig. 3: eine erste Ausführungsform eines Kombi-Verpackungsbehälters, in Ansicht geschnitten;
- Fig. 4: einen Teilbereich des Kombi-Verpackungsbehälters nach Fig. 1 in seinem Bodenbereich, in Ansicht geschnitten und vergrößerter Darstellung;
- Fig. 5: eine weitere, nicht erfinderungsgemäße Ausbildung eines Kombi-Verpackungsbehälters, in schaubildlicher Darstellung;
- Fig. 6: den Kombi-Verpackungsbehälter nach Fig.5, in Ansicht geschnitten;
- Fig. 7: einen Teilbereich des Kombi-Verpackungsbehälters nach den Fig. 5 und 6 in seinem Bodenbereich, in Ansicht geschnitten und vergrößerter Darstellung;
- Fig. 8: ein Diagramm der Stauchdruckprüfung eines bekannten im Inline-Verfahren hergestellten Kombi-Verpackungsbehälters gemäß der EP 0 102 522 A1;
- Fig. 9: ein Vergleichsdiagramm der Stauchdruckprüfung, wie diese für einen Kombi-Verpackungsbehälter gemäß der Fig. 3 und 4 durchgeführt wurde;
- Fig. 10: ein weiteres Vergleichsdiagramm der Stauchdruckprüfung, wie diese für einen Kombi-Verpackungsbehälter gemäß der Fig. 5 bis 7 durchgeführt wurde;
- Fig. 11: eine weitere mögliche Ausbildung eines Kombi-Verpackungsbehälters, in Ansicht, teilweise geschnitten;

- Fig. 12: einen Teilbereich des Kombi-Verpackungsbehälters nach Fig. 11 im Bereich seines offenen Endes, Detail XII in Fig. 11, in Ansicht geschnitten und vergrößerter Darstellung;
- Fig. 13: einen Teilbereich des Kombi-Verpackungsbehälters nach Fig. 11 im Bodenbereich, Detail XIII in Fig. 11, in Ansicht geschnitten und vergrößerter Darstellung;
- Fig. 14: einen Teil der Tiefziehform zur Herstellung des Kombi-Verpackungsbehälters nach den Fig. 11 bis 13, in Ansicht geschnitten und vereinfachter Darstellung;
- Fig. 15: einen vergrößerten Teilabschnitt der Tiefziehform nach Fig. 14, Detail XV in Fig. 14, in Ansicht geschnitten;
- Fig. 16: einen weiteren vergrößerten Teilabschnitt der Tiefziehform nach Fig. 14, Detail XVI in Fig. 14, in Ansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

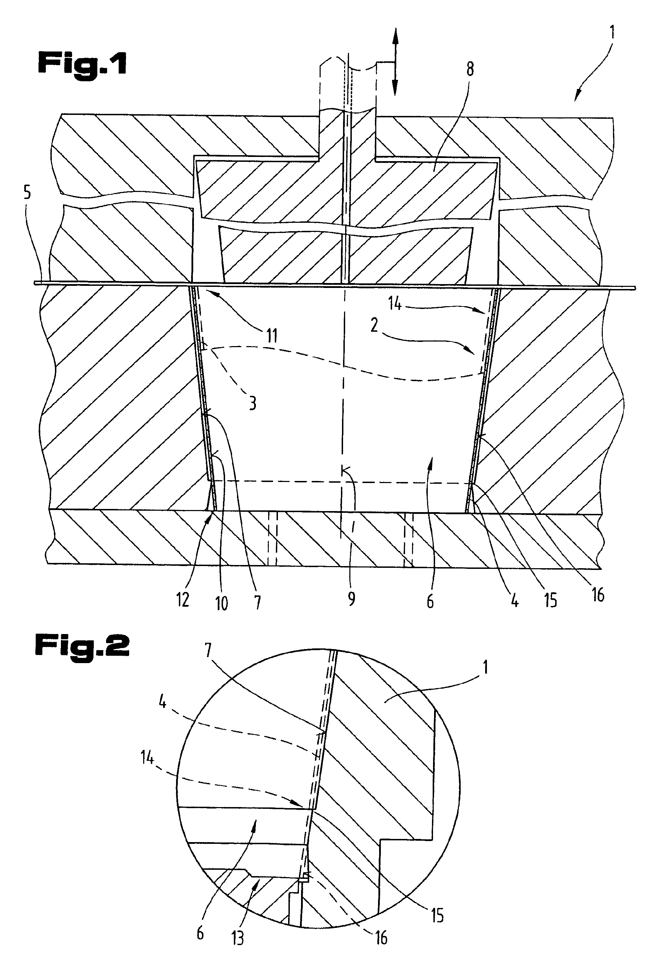

In den Fig. 1 und 2 ist stark schematisch vereinfacht eine Tiefziehform 1 gezeigt, welche zur Herstellung eines Kombi - Verpackungsbehälters 2 bzw. 2' dient, wobei dieser einen durch Tiefziehen hergestellten, becherförmigen Innenbehälter 3 sowie zumindest ein manschettenförmiges Außenteil 4 umfasst. Das Bezugszeichen 2' wird später für gleichartig ausgebildete und ineinander gestapelte Kombi - Verpackungsbehälter verwendet.

Das manschettenförmige Außenteil 4 wird bevorzugt aus einem Kartonmaterial mit einer ausreichenden Festigkeit in Bezug auf die Aufnahme und Übertragung von Druckkräften gebildet und aus einem ebenflächigen Zuschnitt zu einem Mantel gewickelt. An den einander zugewendeten Stirnenden erfolgt die Verbindung zumeist durch eine Überlappungsnaht. So ist lediglich ein einfacher Zuschnitt zur Bildung des mantelförmigen Außenteils 4 herzustellen, welcher beispielsweise mittels der Überlappungsnaht und einem gegebenenfalls dort angeordneten bzw. ausgebildeten Solltrennstreifen gemäß der EP 0 408 515 B1 bzw. der US 5,025,981 A ausgebildet ist. Dieser hier nicht näher dargestellte Solltrennstreifen dient zur Abtrennung des mantelförmigen Außenteils 4, welcher aus einem Papier- oder Kartonmaterial oder aber auch aus einem Kunststoffmaterial gebildet sein kann.

Der becherförmige Innenbehälter 3 wird aus einer Schicht 5 durch Tiefziehen gebildet, wie dies im Bereich eines Formhohlraums 6 der Tiefziehform 1 in strichlierten Linien angedeutet ist. Der Formhohlraum 6 wird dabei durch zumindest eine Formwand 7 begrenzt. So wird bei diesem Verfahren zur Herstellung des Kombi - Verpackungsbehälters 2 vor dem Tiefziehen des becherförmigen Innenbehälters 3 das manschettenförmige Außenteil 4 in die Tiefziehform 1 eingelegt und im so genannten "Inline - Verfahren" die den Innenbehälter 3 bildende Schicht 5 mit einem Formstempel 8 in Richtung einer Längsachse 9 verformt und durch ein zusätzlich in den Formhohlraum 6 eingebrachtes Druckmittel, wie beispielsweise Druckluft, an einer Innenseite 10 bevorzugt vollflächig eng daran anliegend angelegt. Die Innenseite 10 stellt auch gleichzeitig eine Innenfläche des Außenteils 4 dar. Dabei wird das Außenteil 4 im Axialschnitt gesehen als zwischen seinen in Richtung der Längsachse 9 voneinander distanzierten Endbereichen 11, 12 durchlaufend geradlinig verlaufender Bauteil in die Tiefziehform 1, insbesondere dessen Formhohlraum 6, eingelegt. Damit sind außer dem Verbindungsvorgang vom Zuschnitt hin zum geschlossenen Mantel keine weiteren zusätzlichen Arbeitsschritte, wie ein Umbördeln oder eine Formgebung für Stapelmittel oder dergleichen durchzuführen.

Wie nun besser aus dem Detail der Fig. 2 zu ersehen ist, weist der Formhohlraum 6 in einem auszubildenden Bodenbereich 13 des Kombi-Verpackungsbehälters 2 im Bereich einer auszubildenden umlaufenden Behälterwand 14 einen in axialer Richtung bevorzugt stufenförmig ausgebildeten Absatz 15 aus, welcher in den Formhohlraum 6 sowie in Richtung auf die Längsachse 9 vorspringend vorragt. Es kann dabei auch von einem Ansatz gesprochen werden. So wird der Absatz 15 in radialer Richtung bezüglich der Längsachse 9 außen und innen durch ein Absatzende begrenzt. Ist der Kombi-Verpackungsbehältern 2 rund ausgebildet, so weist die den Absatz 15 bildende Absatzfläche eine kreisringförmige Form auf. Die erste Formwand 7 erstreckt sich ausgehend von dem den Absatz 15 außen abschließenden Absatzende bzw. der Begrenzung, also jenem Abschnitt, der von der Längsachse 9 am weitesten entfernt ist, im Axialschnitt gesehen bevorzugt konisch erweiternd bezüglich der Längsachse 9 hin auf die vom Bodenbereich 13 abgewendete Seite. Von jenem der Längsachse 9 näher liegenden Absatzende bzw. Endabschnitt des Absatzes 15 ist je nach herzustellendem Kombi-Verpackungsbehälter 2 die weitere Formwand 7' mit einer zur ersten Formwand 7 im Axialschnitt gesehen dazu unterschiedlichen Neigung ausgerichtet. Somit erstrecken sich ausgehend von den beiden Absatzenden jeweils die Formwände 7, 7' in voneinander abgewendeter bzw. entgegensetzter Richtung. Die Formwand 7' kann parallel bezüglich der Längsachse 9 oder aber auch gegenkonisch zur ersten Formwand 7 ausgerichtet verlaufen.

An diesem Absatz 15, welcher bevorzugt umlaufend bezüglich der Längsachse 9 ausgebildet ist, stützt sich zumeist in der unverformten Ausgangslage das Außenteil 4 mit seiner Außenseite 16 ab.

In dieser vorpositionierten und noch unverformten Lage des Außenteils 4 erfolgt der in bekannter Weise durchzuführende Tiefziehvorgang. Dazu wird die Schicht 5, aus welcher der Innenbehälter 3 gebildet werden soll, mittels des Formstempels 8 in Richtung der Längsachse 9 hin zum Bodenbereich 13 vorgestreckt bzw. vorverformt und anschließend durch Einbringen beispielsweise von Druckluft mit einem bezüglich dem Umgebungsdruck höher liegenden Druck in einer unteren Grenze von 4 bar, insbesondere 6 bar, und einer oberen Grenze von 15 bar, insbesondere 8 bis 10 bar zum fertigen Kombi-Verpackungsbehälter 2 endverformt. Durch diesen Vorgang erfolgt die Einprägung des Absatzes 15 im Bereich des am Beginn noch geradlinig verlaufenen Außenteils 4 zur Bildung der Behälterwand 14.

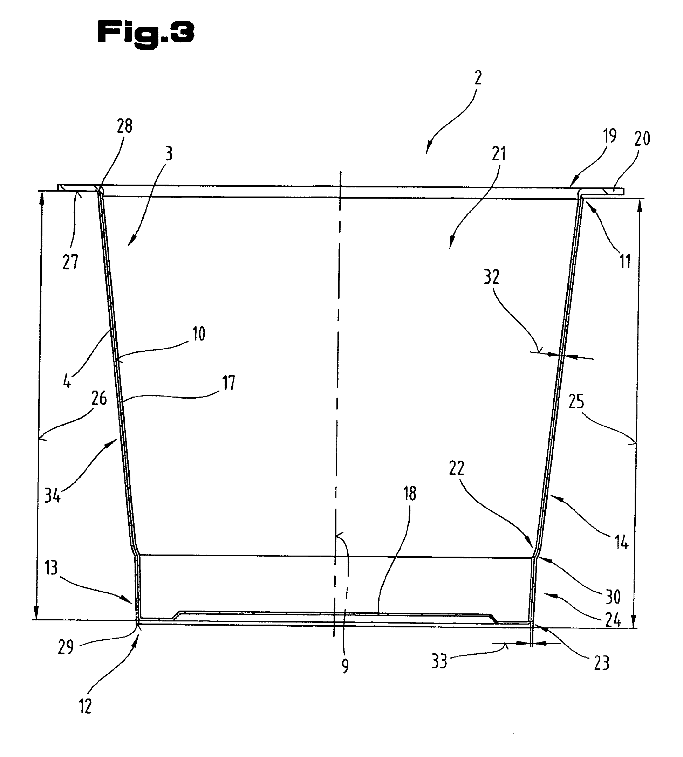

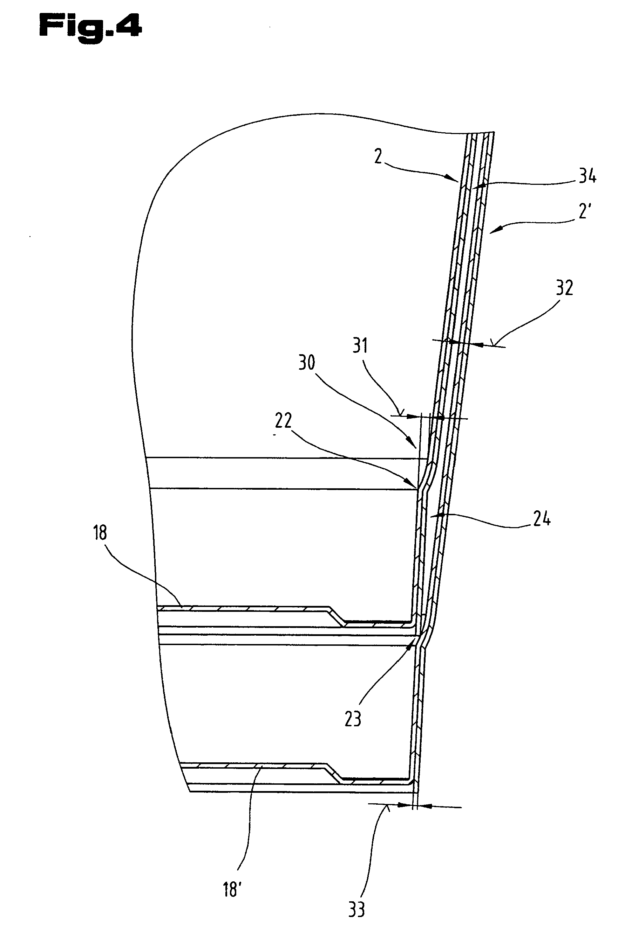

Wie nun besser aus den Fig. 3 und 4 zu ersehen ist, umfasst der becherförmige Innenbehälter 3 einen Behältermantel 17, einen Boden 18 sowie ein auf der davon abgewendeten Seite offenes Ende 19. Im Bereich des offenen Endes 19 kann gegebenenfalls ein den Behältermantel 8 nach außen überragender Flansch 20 angeordnet sein, welcher zum dichtenden Abschluss mit einer hier nicht näher dargestellten Verschlussvorrichtung, insbesondere einer Siegelfolie oder dergleichen ausgebildet sein kann. So kann der Flansch 20 auch als so genannter Siegelflansch oder Siegelrand bezeichnet werden. Der Boden 18 sowie der Behältermantel 17 umgrenzen somit einen Aufnahmeraum 21, welcher zur Aufnahme und somit zur Bevorratung von unterschiedlichsten Lebensmitteln für den Verzehr gedacht ist. Dies können die unterschiedlichsten Getränke, Molkereiprodukte usw. sein.

Der Innenbehälter 3 kann aus den beliebigsten Kunststoffmaterialien bzw. aber auch aus anderen tiefziehbaren biologisch abbaubaren Werkstoffen gebildet sein. Als Kunststoffe können Folien aus dem Werkstoff Polypropylen (PP) oder Polystyrol (PS) eingesetzt werden, wobei Polypropylen den Nachteil eines größeren Schrumpfverhaltens gegenüber Polystyrol aufweist. Der hier gezeigte becherförmig ausgebildete Innenbehälter 3, insbesondere dessen Behältermantel 17, ist bezüglich der Längsachse 9 jeweils konisch verjüngend ausgehend vom offenen Ende 19 hin zum Boden 18 ausgebildet.

Bei bisher bekannten Kombi - Verpackungsbehältern, welche im so genannten "Inline - Verfahren" hergestellt worden sind, wurden entsprechende Stapelhilfen im Bereich des offenen Endes 10 angeordnet bzw. ausgebildet, wie dies bereits aus der DE 31 20 075 A1 sowie der EP 0 102 522 A1 bzw. aber auch der CH 693 611 A5 zu entnehmen ist. Bei all diesen Kombi - Verpackungsbehältern musste das manschettenförmige Außenteil 4 zusätzlich zu dessen Zuschnitt mit einer entsprechenden Prägung bzw. Vorverformung versehen werden, um die entsprechenden Stapelmittel während dem Tiefziehen des becherförmigen Innenbehälters 3 später ausbilden zu können. Eine Stapelkante bildete dabei die Kante zwischen dem Siegelflansch und dem Behältermantel und die weitere Stapelkante wurde durch einen gegenkonisch verformten Behältermantelabschnitt an der Außenseite des Kombi - Verpackungsbehälters im Bereich seines offenen Endes gebildet.

Durch diese Vorprägung war ein ebenflächiges Aufeinanderstapeln von Zuschnitten zur Bildung des Außenteils 4 nur schwer erzielbar bzw. war ein zusätzlicher Arbeitsschritt zu dessen Formgebung im Außenteil 4 notwendig. Dadurch, dass das mantelförmige Außenteil 4 bereits vor dem Tiefziehvorgang in die Tiefziehform 1 eingelegt werden musste, konnte eine entsprechende Formgebung des herzustellenden Innenbehälters 3 nur durch entsprechende Formgebung im Bereich des mantelförmigen Außenteils 4 erfolgen, da der Innenbehälter 3 eng anliegend an dessen Innenseite 7 während dem Herstellvorgang angeformt worden ist.

Bei diesem hier gezeigten Ausführungsbeispiel werden zusammenwirkende Stützmittel 22, 23 zum Ineinanderstapeln von mehreren gleichartigen Kombi - Verpackungsbehältern 2, 2' im Bodenbereich 13 angeordnet bzw. dort ausgebildet. Dabei ist der Übergangs- bzw. Eckbereich zwischen dem Boden 18 und der Behälterwand 14 sowie ein unmittelbar daran anschließender Wandabschnitt 24 zu verstehen.

Das manschettenförmige Außenteil 4 weist in Richtung der Längsachse 9 zwischen seinen Endbereichen 11, 12 eine Höhe 25 auf, welche gleich oder größer ist einer Distanz 26 zwischen einer Unterseite 27 des Flansches 20 und der Unterseite des Bodens 18. Damit kann sich eine Stirnseite 28 des hier oben angeordneten Endbereiches 11 an der Unterseite 27 des Flansches 20 abstützen bzw. liegt diese an der Unterseite 27 an. Es wäre aber auch noch möglich, die Stirnseite 28 unmittelbar benachbart zur Unterseite 27 anzuordnen, wobei dies von der Konizität sowie der relativen Lage des Außenteils 4 im Formhohlraum 6 abhängig ist. Die Stirnseite 29 ist ebenflächig, bevorzugt jedoch den Boden 18 auf die vom offenen Ende 19 abgewendete Richtung überragend ausgebildet.

Bei diesem hier gezeigten Ausführungsbeispiel ist das manschettenförmige Außenteil 4 mit Ausnahme seines Verbindungsbereiches im Überlappungsbereich zwischen seinen in Richtung der Längsachse 9 voneinander distanzierten Endbereichen 11, 12 einlagig ausgebildet. Weiters bildet eine dem Flansch 20 gegenüberliegende Stirnseite 29 des Außenteils 4 eine Aufstandsfläche für den Kombi-Verpackungsbehälter 2, 2' aus. Die zuvor beschriebene einlagige Ausbildung des Außenteils 4 wird dahingehend verstanden, dass über die gesamte Längs- bzw. Höhenerstreckung des Außenteils 4 in Richtung der Längsachse 9 keinerlei Umfalzungen oder dergleichen sowie gegebenenfalls zusätzliche Einlageteile vorgesehen sind. Die Doppellagigkeit im Verbindungsbereich der beiden einander zugewendeten Stirnenden des zu verbindenden Zuschnitts ist aufgrund der gewählten Verbindung nicht auszuschließen.

Durch diese Ausbildung kann eine direkte Lastabtragung in Richtung der Längsachse 9, ausgehend vom Flansch 20 über dessen Unterseite 27 auf die umlaufende Stirnseite 28 des Außenteils 4 und weiter über dieses bis hin zu der die Aufstandsfläche bildenden Stirnseite 29 erfolgen. Damit kommt dem Innenbehälter 3 im Abschnitt seines Behältermantels 17 nur mehr die Funktion einer dichtenden Hülle zur Aufnahme bzw. Bevorratung der dafür vorgesehenen Speisen bzw. Getränke zu. So übernimmt im Bereich der Behälterwand 14 ausschließlich das Außenteil 4 die tragende Stützfunktion. Da der Boden 18 mit seiner Unterseite die Stirnseite 29 nicht überragt, kommt auch diesem nur die Tragfunktion des Gewichtes der darin aufgenommenen Produkte zu.

Die zuvor beschriebenen Stützmittel 22, 23 werden, wie dies am besten aus der Fig. 4 zu ersehen ist, einerseits durch die dem Boden 18 zugewendete Stirnseite 29 des Außenteils 4 und andererseits durch eine in die Behälterwand 14 eingeformte Einschnürung 30 gebildet. Diese Einschnürung 30 wird - wie dies auch aus der Fig. 2 zu ersehen ist - durch den im Bodenbereich 13 angeordneten Absatz 15 während dem Formgebungsvorgang der gesamten Behälterwand 14 gebildet. Durch das in den Formhohlraum 6 eingebrachte Druckmedium erfolgt zuerst eine Umformung des Außenteils 4 um den stufenförmigen Absatz 15 herum, bis dass eine vollständige Anlage sowohl des Außenteils 4 als auch des Innenbehälters 3, insbesondere dessen Behältermantel 17 an der Formwand 7 erfolgt.

Somit ist die Einschnürung 30 sowohl am Außenteil 4 als auch am Behältermantel 17 ausgebildet. Bevorzugt wird die Einschnürung 30 umlaufend über den Umfang des Kombi-Verpackungsbehälters 2, 2' ausgebildet. Es wäre aber unabhängig davon möglich, die Einschnürung 30 nur bereichsweise über den Umfang verteilt an vorbestimmten Stellen anzuordnen bzw. auszubilden. Eine entsprechende Abstützung des durch die Stirnseite 29 gebildeten Stützmittels 23 kann auch bei nicht voll umfänglich durchlaufender Einschnürung 30 in ausreichender Weise erfolgen. Eine bessere Abstützung wird jedoch bei einer voll umfänglich durchlaufenden Einschnürung 30 erzielt.

Weiters ist es vorteilhaft, wenn die in Richtung auf die Längsachse 9 vorragende Einschnürung 30 stufenförmig ausgebildet ist bzw. einen stufenförmigen Absatz im Bereich der Behälterwand 14 ausbildet. Dieser Absatz bildet dann einen Stützbereich bzw. eine Stützfläche aus, welcher das weitere Stützmittel 22 darstellt. Diese Einschnürung 30 kann aber auch als so genannter Knick bezeichnet werden, mit welchem die Behälterwand 14 in Richtung auf die Längsachse 9 hin versetzt ausgebildet ist. Dabei können auch noch verbindende Übergangsradien zwischen der Einschnürung 30 und den angrenzenden Wandabschnitten 24 bzw. 34 angeordnet sein. So weist die Einschnürung 30 des Behältermantels 17 eine Höhe 31 in radialer Richtung bezüglich der Längsachse 9 auf, welche größer ist als eine unverformte Ausgangsstärke 32 des Außenteils 4. Dadurch wird sichergestellt, dass das Stützmittel 22 ausreichend weit in Richtung auf die Längsachse 9 hin vorragt und so in weiterer Folge die Stirnseite 29 des Außenteils 4 sich ohne Verklemmen der ineinander gestapelten, Verpackungsbehälter 2, 2' daran abstützten kann.

Durch den zuvor beschriebenen Anpressvorgang der Behälterwand 14, insbesondere des Wandabschnitts 24 des Außenteils 4, an der Formwand 7 des Formhohlraums 6 wird so dieser Wandabschnitt 24 zwischen der Einschnürung 30 und dem dem Boden 18 zugewendeten Endbereich 12 in seiner Stärke 33 in radialer Richtung bezogen auf die Längsachse 9 um ein Ausmaß in einer unteren Grenze von 2 % und einer oberen Grenze von 20 % bezüglich seiner unverformten Ausgangsstärke 32 reduziert. Durch dieses Verpressen des Außenteils 4 wird in diesem Abschnitt eine dichtere Struktur erzielt, wodurch auch bei der offenen Schnittkante im Bereich der Stirnseite 29 das Feuchtigkeits- bzw. Wasseraufnahmevermögen stark reduziert wird. Um dieses Aufnahmevermögen im Bereich der offenen Stirnseite 29 noch zusätzlich zu verringern, kann es sich als vorteilhaft erweisen, wenn zumindest die Stirnseite 29 sowie gegebenenfalls der Wandabschnitt 24 an seiner Innenseite 10 und/oder seiner Außenseite 16 zusätzlich noch mit einer nicht näher dargestellten Beschichtung versehen ist. Diese Beschichtung soll das Eindringen bzw. die Aufnahme von Feuchtigkeit in die offene Schnittkante sowie gegebenenfalls in die umliegenden Bereiche verhindern und kann aus der Gruppe von Lacken, Wachsen, Imprägnierungen usw. ausgewählt sein.

Weiters ist in der Darstellung der Fig. 3 noch zu ersehen, dass im Axialschnitt gesehen ein weiterer Wandabschnitt 34 des Außenteils 4 zwischen der Einschnürung 30 und dem dem Flansch 20 zugewendeten Endbereich 11, insbesondere der Stirnseite 28, dieser durchlaufend geradlinig ausgebildet ist. Weiters kann dieser Wandabschnitt 34 des Außenteils 4, ausgehend vom Flansch 20 hin in Richtung auf den Boden 18 konisch bzw. kegelstumpfförmig verjüngend ausgebildet sein. Der Begriff konisch bezieht sich auf den Axialschnitt sowie auf die Längsachse 9. Auch der zwischen der Einschnürung 30 und dem dem Boden 18 zugewendeten Endbereich 12 angeordnete bzw. ausgebildete Wandabschnitt 24 des Außenteils 4 kann im Axialschnitt gesehen durchlaufend geradlinig ausgebildet sein. Bevorzugt wird jedoch dieser Wandabschnitt 24 mit einer zum weiteren Wandabschnitt 34 dazu unterschiedlichen, insbesondere geringeren Neigung bezogen auf die Längsachse 9 ausgebildet. So kann der Wandabschnitt 24 des Außenteils 4 zwischen dem Ende der Einschnürung 30 und dem dem Boden 18 zugewendeten Endbereich 12 bezüglich der Längsachse 9 parallel verlaufend ausgerichtet sein. Bei einem rund ausgebildeten Kombi-Verpackungsbehälter 2 ist dann dieser Wandabschnitt 24 zylinderförmig. Um eine noch bessere Abstützung bzw. maßliche Erweiterung des Stützmittels 23, welches durch die Stirnseite 29 gebildet ist, zu erzielen, kann der Wandabschnitt 24 des Außenteils 4, ausgehend vom Ende der Einschnürung 30 hin in Richtung auf den Boden 18 im Axialschnitt gesehen bezogen auf die Längsachse 9 konisch erweiternd ausgebildet sein. Räumlich gesehen bildet somit der Wandabschnitt 24 einen Teil eines Kegelstumpfmantels aus.

Um eine noch bessere Verbindung, insbesondere das Abstreifen des Außenteils 4 vom Innenbehälter 3 zu vermeiden, kann es sich als vorteilhaft erweisen, wenn das manschettenförmige Außenteil 4 über eine peelbare Verklebung mit dem Behältermantel 17 des Innenbehälters 3 verbunden ist. Unter peelbarer Verklebung wird eine Verbindung verstanden, bei welcher nur eine Haftverbindung zwischen den einander zugewendeten Oberflächen erfolgt, jedoch ein Abtrennen des Außenteils 4 vom Innenbehälter 3 für eine getrennte Abfallentsorgung möglich ist. Dieses Klebemittel kann beispielsweise auf die Innenseite 10 des Außenteils 4 aufgebracht werden, bevor das aufgerichtete Außenteil 4 in den Formhohlraum 6 zur weiteren Formgebung eingebracht wird.

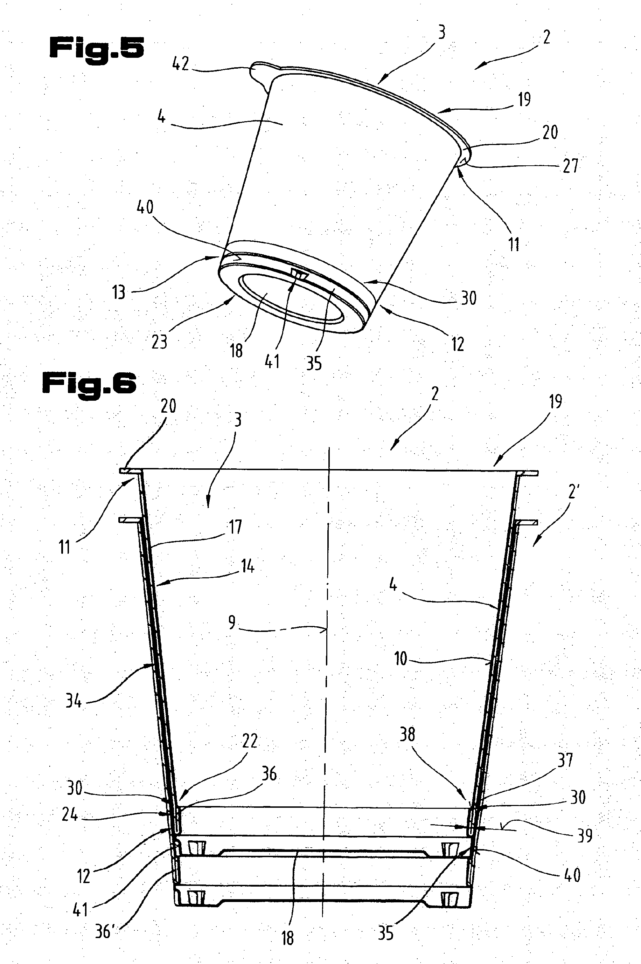

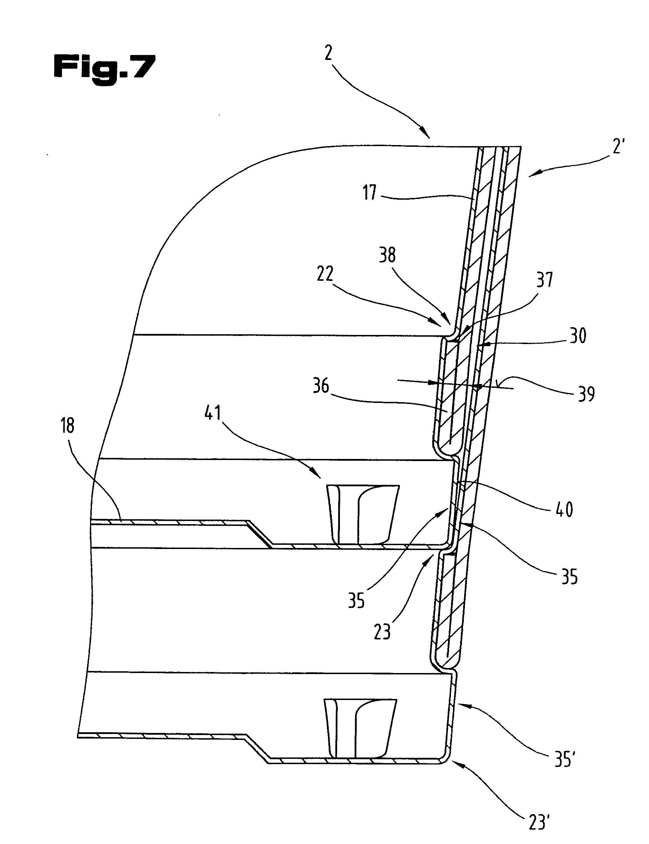

In den Fig. 5 bis 7 ist eine weitere, nicht erfinderungsgemäße Ausführungsform des Kombi-Verpackungsbehälters 2, 2' gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Auch diese hier gezeigten Kombi-Verpackungsbehälter 2, 2' umfassen wiederum den becherförmigen Innenbehälter 3 mit seinem Behältermantel 17, den Boden 18 sowie den im Bereich des offenen Endes 19 angeordneten Flansch 20. Der Behältermantel 17 wird zumindest zu seinem größten Teil vom Außenteil 4 umgeben, wobei der Behältermantel 17 wiederum im Inline-Prozess direkt an die Innenseite 10 des Außenteils 4 angeformt ist.

Bei diesem hier gezeigten Ausführungsbeispiel überragt im Bodenbereich 13 der Boden 18 sowie ein Teilabschnitt 35 des Behältermantels 17 den unteren Endbereich 12 des Außenteils 4. Zusätzlich ist im hier unteren Endbereich 12 das Außenteil 4 mit einer bevorzugt umlaufenden Umfalzung 36 verstärkt, welche an der Innenseite 10 des Außenteils 4 angeordnet ist. Unter einer Umfalzung wird der umgeschlagene Wandteil des Außenteils 4 verstanden. Durch einfaches Umschlagen wird diese in einlagiger Form und durch mehrfaches Umschlagen bzw. Umbördeln eine mehrlagige Umfalzung 36 erhalten. Eine technisch äquivalente Lösung würde ein zusätzlicher ringförmiger Bauteil darstellen, welche an der Innenseite 10 des Außenteils 4 angebracht wird.

Ansonst ist das manschettenförmige Außenteil 4 wiederum zwischen seinen in Richtung der Längsachse 9 voneinander distanzierten Endbereichen 11, 12 einlagig ausgebildet. Eine Ausnahme kann wieder der zuvor beschriebene Überlappungsbereich darstellen. Ein dem offenen Ende 19 zugewendetes Stirnende 37 der Umfalzung 36 bildet im Zusammenwirken mit der Einschnürung 30 im Behältermantel 17 einen in Richtung auf die Längsachse 9 vorragenden Stützbereich 38 aus. Der Stützbereich 38 bildet hier das innen liegende erste Stützmittel 22 aus.

Das Außenteil 4 ist bei diesem Ausführungsbeispiel zwischen der Einschnürung 30 und den beiden in Richtung der Längsachse 9 distanzierten Endbereichen 11, 12 jeweils geradlinig ausgebildet. Damit bildet sich bei einer gedachten geradlinigen Verbindung zwischen den beiden Endbereichen 11, 12 im Bereich der Einschnürung 30 ein in Richtung auf die Längsachse 9 ragender Knick in der Behälterwand 14 aus. Um den Stützbereich 38 zusätzlich noch weiter in radialer Richtung hin zur Längsachse 9 zu verlagern, ist es vorteilhaft, wenn die Einschnürung 30 im Bereich des Stirnendes 37 der Umfalzung 36 angeordnet ist. Dadurch wird die Behälterwand 14 zwischen der Einschnürung 30 und dem dem Boden 18 zugewendeten Endbereich 12 in den ersten Wandabschnitt 24 sowie zwischen der Einschnürung 30 und dem dem offenen Ende 19 zugewendeten Endbereich 11 in den weiteren Teilabschnitt 34 unterteilt.

Zusätzlich dazu oder unabhängig davon ist es aber auch noch möglich, die Einschnürung 30 stufenförmig auszubilden, wie dies bereits zuvor beschrieben worden ist. Dadurch wird der Stützbereich 38 in radialer Richtung vergrößert, wobei hier eine Höhe desselben in radialer Richtung bezüglich der Längsachse 9 größer ist als eine Dicke 39 der Umfalzung 36. Dieses zusätzliche Verformen des Außenteils 4 kann analog erfolgen, wie dies bereits zuvor in den Fig. 3 und 4 erfolgt ist. Der Einfachheit halber wurde auf eine detaillierte Darstellung verzichtet.

Bevorzugt wird der den unteren Endbereich 12 des Außenteils 4 überragende Teilabschnitt 35 des Behältermantels 17 mit seiner von der Längsachse 9 abgewendeten Außenfläche 40 zumindest ebenflächig bezüglich der Außenseite 16 des Außenteils 4 im Bereich des ersten Wandabschnitts 24 verlaufend angeordnet. Durch dieses Vorragen in radialer Richtung wird der untere Endbereich 12 des Außenteils 4 vom Behältermantel 17 in radialer Richtung nach außen übergriffen. Dadurch kann ein unbeabsichtigtes Lösen des Außenteils 4 vom Innenbehälter 3 aufgrund der Konizität des Kombi-Verpackungsbehälters 2 unterbunden werden. Dabei könnte auch auf die Verklebung zwischen dem Außenteil 4 und dem Innenteil 3 verzichtet werden. Damit bildet der Eckbereich zwischen dem Boden 18 und dem Teilabschnitt 35 das weitere Stützmittel 23.

Um ein leichteres Entstapeln von ineinander gestapelten Kombi-Verpackungsbehälter 2, 2' zu erleichtern, kann es sich als vorteilhaft erweisen, wenn in dem zwischen dem unteren Endbereich 12 des Außenteils 4 und dem Boden 18 angeordneten Teilabschnitt 35 des Behältermantels 17 in diesem zumindest eine, bevorzugt jedoch über den Umfang verteilt mehrere Einbuchtungen 41 eingeformt bzw. angeordnet sind. Dadurch wird ein Hindurchströmen von Luft während dem Entnehmen ermöglicht und ein Aufbau des Vakuums zwischen ineinander gestapelten Kombi-Verpackungsbehältern 2, 2' vermieden. Die Einbuchtung 41 erstreckt sich in Richtung der Längsachse 9 gesehen nahezu über die gesamte Höhe des Teilabschnitts 35. Bei den zuvor beschriebenen Kombi-Verpackungsbehältern 2, 2' übernimmt das manschettenförmige Außenteil 4 die Abtragung der Stützlast in Richtung der Längsachse 9 ausgehend vom Flansch 20 hin zum Boden 18 und der dort angeordneten Stirnseite 29.

Bei bislang im Inline-Verfahren gefertigten Kombi-Verpackungsbehältern 2, 2' wurde je nach Behältergröße mit einer Ausgangsfolienstärke von 0,75 mm und dicker das Auslangen gefunden. Wird jedoch der Kombi-Verpackungsbehälter 2, insbesondere nach den Fig. 3 und 4 hergestellt, hat es sich als vorteilhaft erwiesen, zur weiteren Einsparung an Rohstoffreserven die Ausgangswandstärke der Schicht 5 weiter zu reduzieren. Da dem Innenbehälter 3 nur mehr eine Dichtfunktion zukommt, kann hier mit einer Wandstärke von kleiner 0,75 mm das Auslangen gefunden werden. Zur Erzielung einer minimalen Wandstärke des Behältermantels 17 konnte auch schon mit einer Ausgangsstärke der Schicht 5 von 0,5 mm oder aber auch noch kleiner ein Kombi-Verpackungsbehälter 2 hergestellt werden. Probleme ergeben sich dadurch bei der Ausbildung des Flansches 20 als Siegelrand, da dieser bei den geringen Folienstärken zwar einen ordnungsgemäßen Siegelvorgang ermöglicht, jedoch das Ablösen und Auftrennen der Siegelnaht zumeinst mit einer Beschädigung bis hin zum vollständigen Abreisen des Flansches 20 vom Behältermantel 17 mit einhergeht. Dazu wäre es vorteilhaft, im Bereich des Flansches 20, wie dies vereinfacht in der Fig. 5 dargestellt ist, eine zusätzliche Lasche 42 mit auszubilden, welche während dem Herstellvorgang in einem Stück mit dem Flansch 20 ausgebildet wird. Dies kann bei den hier gezeigten Ausführungsformen erfolgen.

Das Verschließen des offenen Endes 19 im Zuge des Siegelvorganges erfolgt in bekannter Weise, wobei die hier nicht näher dargestellte Aufrisslasche des Siegeldeckels orientiert bezüglich der Lasche 42 in bevorzugt überdeckender Lage ausgerichtet wird. Dadurch kann beim Abreißen des Siegeldeckels einerseits die Aufrisslasche des Siegeldeckels und andererseits die Lasche 42 des Innenbehälters 3 angefasst werden und so der Aufrissvorgang wesentlich erleichtert werden. Dies bedingt, dass die Aufrisslasche des Siegeldeckels und die Lasche 42 im Bereich des Flansches 20 nicht miteinander verbunden sind, um ein getrenntes Anfassen beider Laschen zu ermöglichen. Damit erreicht man durch das Anbringen der Lasche 42 einen gewissen Gegenhalt beim Öffnen des Kombi-Verpackungsbehälters 2.

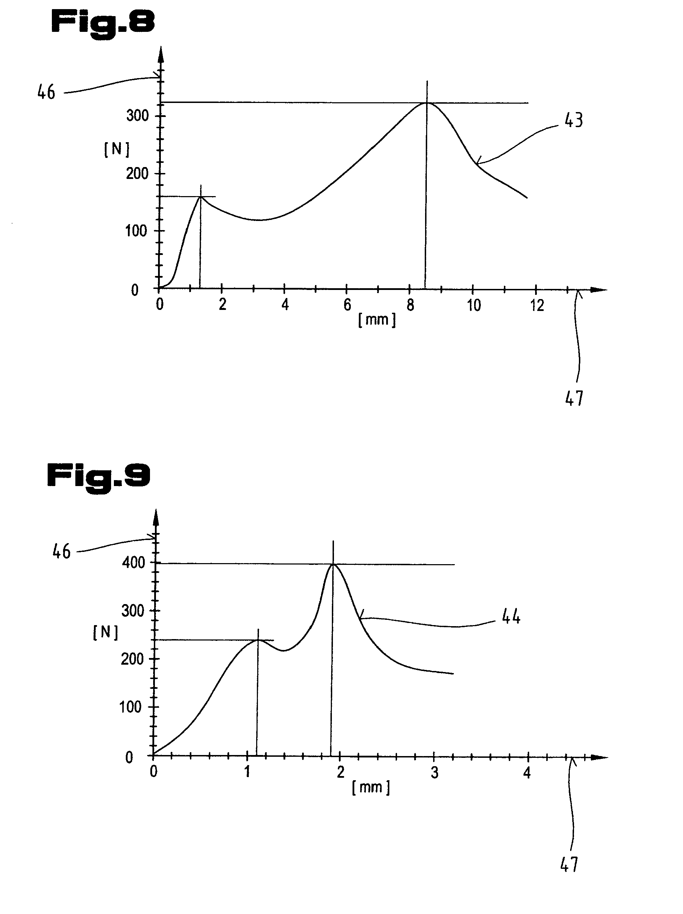

Die einzelnen Diagramme in den Fig. 8 bis 10 zeigen in unterschiedlichen Kennlinien 43 bis 45 das Druckverhalten von unterschiedlichen Kombi-Verpackungsbehältern 2. Es wurden dabei jeweils Bechertypen mit dem gleichen Material betreffend den Innenbehälter 3 sowie das Außenteil 4, die gleichen Abmessungen im Bereich des offenen Endes 19, das gleiche Füllvolumen bei gleicher Bauhöhe des Bechers miteinander verglichen, um so auch aussagekräftige Werte zu erhalten. Die dargestellten Kennlinien 43 bis 45 sind gemittelte Kurvenverläufe, welche aus mehreren Messreihen von gleichartigen Bechern ermittelt worden sind. Die Durchführung der Druckbelastung erfolgte dabei so, dass die zu prüfenden Kombi-Verpackungsbehälter 2 mit ihrem Flansch 20, also dem offenen Ende 19, kopfüber auf einer Stützplatte abgestützt worden sind und der Boden nun das obere Ende des Bechers bildet. In dieser Kopfüber-Lage wurde die Druckprüfung und Aufzeichnung des Verformungsweges durchgeführt. Die Einbringung der Druckkraft erfolgt in paralleler Richtung bezüglich der Längsachse 9.

So wird in der Fig. 8 der Druckversuch an einem bekannten Kombi-Verpackungsbehälter gemäß der EP 0 102 522 A1 - Fig. 1 dargestellt, wobei auf einer Ordinate 46 die einwirkende Kraft in [N] und auf einer Abszisse 47 der Stauchweg in [mm] aufgetragen ist. Der erste Höchstwert der Kurve wird ca. bei einer Stauchlänge von 1,3 mm erreicht, wobei hier vom Becher eine Kraft von in etwa 160 kN aufgenommen werden konnte. Bei diesem ersten Höchstwert der Kennlinie 43 beginnt der Boden einzuknicken und es erfolgt bei Abnahme der Kraft eine weitere und stärkere Deformation des Bechers. Dann übernimmt das Außenteil 4 die Tragfunktion, wodurch ein Maximalwert bei einer Verformung von ca. 8,5 mm mit einer aufgenommenen Kraft von ca. 325 N erreicht wird. Dann beginnt aufgrund der im Bereich des offenen Endes eingeformten nach außen vorragenden Stapelschulter der Becher in sich zusammen zu sacken, wodurch keine weitere höhere Druckkraft mehr erreicht werden konnte.

In der Fig. 9 ist in einem weiteren Diagramm die Kraftaufnahme des gemäß den in Fig. 3 und 4 dargestellten Kombi-Verpackungsbehälters 2 mit der dazu ermittelten Kennlinie 44 dargestellt. Auf der Ordinate 46 ist wiederum die einwirkende Kraft in [N] und auf der Abszisse 47 der Stauchweg [mm] aufgetragen. Der erste Höchstwert der Kurve wird bei einer Stauchstrecke von ca. 1,1 mm erreicht, wobei hier die aufgenommene Kraft bereits ca. 240 N beträgt. Dieser erste Höchstwert wird dann erreicht, wenn das Außenteil 4 vollständig hin auf den Flansch 20 aufgeschoben worden ist und so sich der Flansch 20 in Art eines Gelenkes, ausgehend vom Übergang hin zum Behältermantel 17, an den davon abgewendeten Enden von der nicht näher dargestellten Abstützplatte abhebt. Durch dieses Aufstellen des Flansches 20 kommt es zu einer geringfügigen Abnahme der vom Kombi-Verpackungsbehälter aufgenommenen Druckkraft, wobei nach kurzem weiterem Verformungsweg bei ca. 1,9 mm Gesamtverformungsweg das Maximum der aufgenommenen Druckkraft mit knapp 400 N erreicht wird. Anschließend an diesen erreichten Maximalwert beginnt auch das Außenteil 4 sich stärker zu Verformen und es ist keine weitere Aufnahme einer höheren Druckkraft mehr möglich.

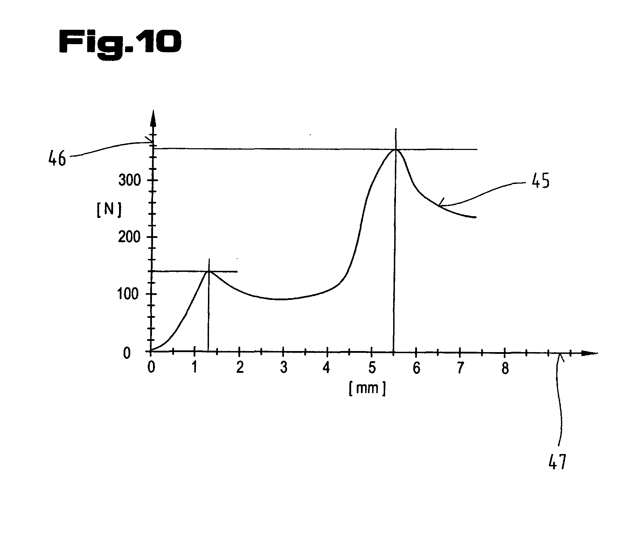

Schließlich ist in der Fig. 10 für die Ausführungsform des Kombi-Verpackungsbehälters 2 gemäß der Fig. 5 bis 7 die dafür ermittelte Kennlinie 45 bei Druckbelastung dargestellt. Diese entspricht in ihrem Anfangsverlauf in etwa jenem, wie dieser bereits in der Fig. 8 beschrieben worden ist, da die Bodenausbildung hier sehr ähnlich gewählt ist. Dabei wird bei einer Verformungsstrecke von ca. 1,3 mm der erste Höchstwert mit ca. 140 N erreicht. Anschließend erfolgt eine Deformation des Bodens, wodurch bei großem Verformungsweg die aufgenommene Kraft vorerst abnimmt bis dass das Außenteil 4 die tragende Funktion übernimmt. Anschließend erfolgt eine rasche Abstützwirkung des Außenteils 4 und damit eine höhere Kraftaufnahme, wobei der nächste Höchstwert auch den Maximalwert darstellt und eine Kraft von ca. 355 N aufgenommen werden kann, welche bei einem Stauchweg von ca. 5,5 mm erreicht wird. Dieser Wert ist gegenüber jenem in der Fig. 8 höher, da hier keine Stapelschulter im Bereich des offenen Endes 19 vorgesehen ist. Anschließend daran beginnt auch hier wieder das Außenteil 4 seine Stützfunktion zu verlieren und damit nimmt die Tragfunktion des gesamten Kombi-Verpackungsbehälters 2 wiederum stark ab.

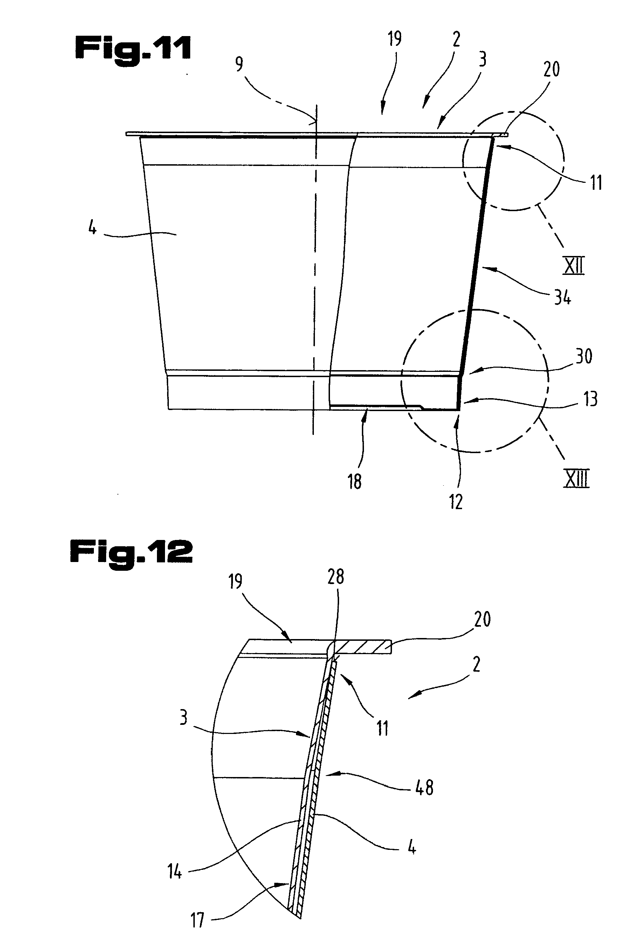

In den Fig. 11 bis 13 ist eine weitere und gegebenenfalls für sich eigenständige Ausführungsform des Kombi-Verpackungsbehälters 2 gezeigt, wobei wiederum für gleiche Teile gleiche Bezugszeichen bzw. Bauteilbezeichnungen wie in den vorangegangenen Fig. 1 bis 10 verwendet werden. Um unnötige Wiederholungen zu vermeiden, wird auf die detaillierte Beschreibung in den vorangegangenen Fig. 1 bis 10 hingewiesen bzw. Bezug genommen.

Wie bereits zuvor beschrieben, stellt die Wahl der Werkstoffe für den Fertigungsprozess eine wesentliche Rolle dar. Bei Werkstoffen mit einem größeren Schwund nach der Formgebung und Abkühlung besteht gerade bei im Inline-Verfahren hergestellten Kombi-Verpackungsbehältem das Problem, dass die während der Herstellung angeformte Behälterwand 14 des Innenbehälters 3 sich von der Innenseite 10 des Außenteils 4 distanziert und so ein geringfügiger Spalt zwischen der Behälterwand 14 bzw. dem Behältermantel 17 und dem Außenteil 4 entsteht. Beim Werkstoff Polypropylen (PP) ist mit einem Schrumpf von ca. 2% zu rechnen. Werden der Innenbehälter und das Außenteil getrennt voneinander, also offline, gefertigt, kann bei der Herstellung des Innenbehälters der Schwund berücksichtigt werden. So kann der Innenbehälter um das Ausmaß des späteren Schwundes größer hergestellt werden. Nach dem Schrumpf können dann beide aufeinander abgestimmten Teile zusammengefügt oder der Innenbehälter mit dem Außenteil umwickelt werden.

Auch bei diesem hier dargestellten Kombi-Verpackungsbehälter 2 wird in dem dem Boden 18 zugewendeten Bodenbereich 13 des Behältermantels 17 wiederum die zuvor beschriebene erste Einschnürung 30 ausgebildet, welche distanziert vom unteren Endbereich 12 des Außenteils 4 angeordnet ist.

Wie nun besser aus einer Zusammenschau der Fig. 11 und 12 zu ersehen ist, ist im Bereich des weiteren Wandabschnitts 34 zwischen der ersten Einschnürung 30 und dem dem Flansch 20 zugewendeten Endbereich 11 des Außenteils 4 eine weitere in radialer Richtung auf die Längsachse 9 hin gerichtete Einschnürung 48 ausgebildet bzw. eingeformt.

Dabei sei erwähnt, dass die dazu ausgebildete Tiefziehform 1 sowie das damit verbundene Verfahren zur Herstellung des Kombi-Verpackungsbehälters 2 nachfolgend noch detailliert beschrieben werden wird.

Die hier dargestellte weitere Einschnürung 48 wird während dem Herstellvorgang sowohl in das Außenteil 4 als auch den Behältermantel 17 eingeformt, wobei aufgrund des Schrumpfes die Einschnürung 48 im Bereich des Außenteils 4 durch die dem Werkstoff innewohnenden Eigenschaften nahezu zurückverstellt wird. Dies erfolgt während dem Abkühlvorgang in einem selbsttätigen Prozess. Weiters ist hier noch zu ersehen, dass die weitere Einschnürung 48 in axialer Richtung von dem dem Flansch 20 zugewendeten Endbereich 11 des Außenteils 4 hin zum Boden 18 distanziert angeordnet ist. Dieses Ausmaß der Distanzierung hängt von der Größe und dem Aufnahmevolumen des Kombi-Verpackungsbehälters 2 ab und kann beispielsweise zwischen 0,5 cm und 2,5 cm betragen.

Aufgrund der Tatsache, dass das manschettenförmige Außenteil 4 bevorzugt aus einem wieder verwertbaren Werkstoff aus Zellulose, wie beispielsweise Papier oder Karton, gebildet ist, kann während der Formgebung des Kombi-Verpackungsbehälters 2 eine Verformung stattfinden, welche jedoch nach dem Entnehmen aus der Tiefziehform 1 und dem nachfolgenden Abkühlvorgang wieder nahezu zurückverstellt wird. So weist das Ausmaß der weiteren Einschnürung 48 im Behältermantel 17 des Innenbehälters 3 einen größeren Wert auf, als der Wert des Ausmaßes der weiteren Einschnürung 30 im Außenteil 4 ist. Dieser Wert der Einschnürung im Außenteil kann nach der Rückverformung bis hin auf null sinken. Als Ausmaß der Einschnürung wird hier verstanden, dass dies die Abweichung von einer gestreckten Anordnung der beidseits der Einschnürung 48 angeordneten Bauteile bzw. Wandteile des Außenteils 4 bzw. des Behältermantels 17 ist. Die weitere Einschnürung 48 bildet somit im Längsverlauf des Außenteils 4 und/oder Behältermantels 17 einen mehr oder weniger großen Knick aus.

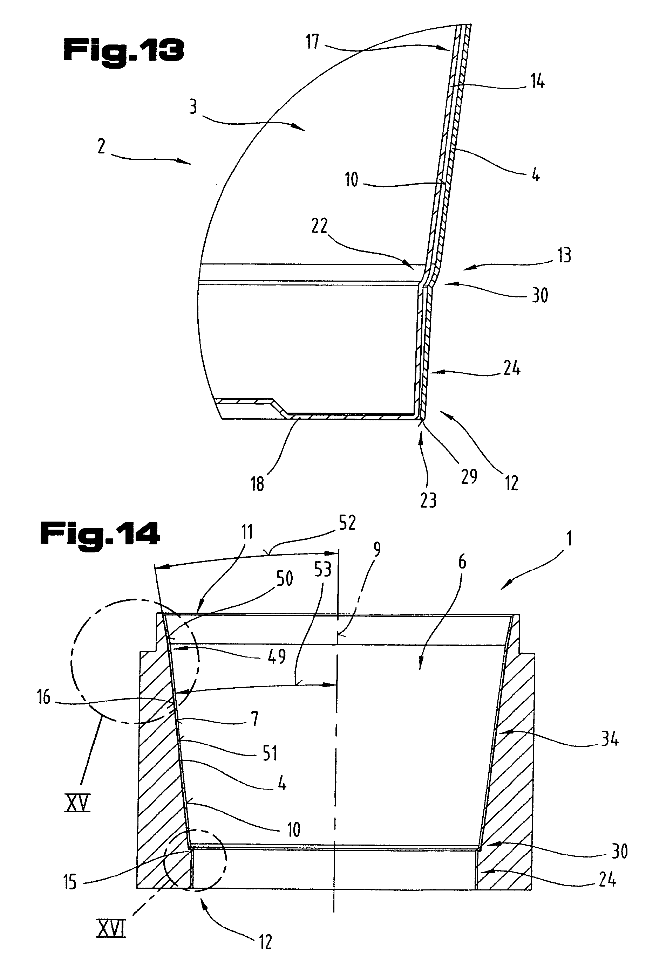

In der Fig. 13 ist ein Teilabschnitt des Kombi-Verpackungsbehälters 2 in seinem Bodenbereich 13 dargestellt, in welchem die zuvor beschriebene erste Einschnürung 30 dargestellt ist. Durch das beschriebene Schwundverhalten des Werkstoffes nach der Bildung des Innenbehälters 3 erfolgt auch in diesem Abschnitt eine Distanzierung der Behälterwand 14 bzw. des Behältermantels 17 von der der Längsachse 9 zugewendeten Innenseite 10 bzw. Innenfläche des Außenteils 4.

Wie nun aus einer Zusammenschau der Fig. 12 und 13 zu ersehen ist, erfolgt eine Abstützung bzw. Anlage des Außenteils 4 am Innenbehälter 3 im unmittelbaren Nahbereich an die in Axialrichtung voneinander distanzierten Stirnseiten 28, 29 an der Innenseite 10 bzw. Innenfläche des Außenteils 4. Zwischen diesen Abstützbereichen ist zumeist eine minimale Distanzierung zwischen dem Behältermantel 17 und dem Außenteil 4 vorhanden.

Weiters sei hier noch erwähnt, dass die Anordnung der weiteren Einschnürung 48 im Bereich des offenen Endes 19 des Kombi-Verpackungsbehälters 2 für sich alleinig gewählt werden kann und die erste Einschnürung 30 bei Bedarf auch entfallen kann. Werden jedoch zusammenwirkende Stützmittel 22, 23 zum Ineinanderstapeln von gleichartig ausgebildeten Kombi-Verpackungsbehältern 2, 2' benötigt, ist auch hier die zuvor beschriebene Ausbildung der ersten Einschnürung 30 vorzusehen.

In den Fig. 14 bis 16 ist eine weitere und gegebenenfalls für sich eigenständige Ausführungsform der Tiefziehform 1 gezeigt, wobei wiederum für gleiche Teile gleiche Bezugszeichen bzw. Bauteilbezeichnungen wie in den vorangegangenen Fig. 1 bis 13 verwendet werden. Um unnötige Wiederholungen zu vermeiden, wird auf die detaillierte Beschreibung in den vorangegangenen Fig. 1 bis 13 hingewiesen bzw. Bezug genommen.

Bei dieser hier gewählten Darstellung der Tiefziehform 1 ist in deren Formhohlraum 6 das bereits verformte Außenteil 4 unmittelbar nach dem Formgebungsvorgang dargestellt, wobei der besseren Übersichtlichkeit halber auf die Darstellung des Innenbehälters 3 verzichtet worden ist. Es erfolgt auch hier die gemeinsame Formgebung des Innenbehälters 3 sowie des Außenteils 4 in einem gemeinsamen Formvorgang innerhalb der Tiefziehform 1, wie dies bereits zuvor beschrieben worden ist.

Zusätzlich zu der zuvor in den Fig. 1 und 2 dargestellten Tiefziehform 1 weist diese hier dargestellte Tiefziehform 1 im Bereich des herzustellenden offenen Endes 19 des Kombi-Verpackungsbehälters 2 im Axialschnitt gesehen keinen geradlinigen Verlauf der den Formhohlraum 6 begrenzenden Formwand 7 auf. So weist im Axialschnitt gesehen die den Formhohlraum 6 begrenzende Formwand 7 im Bereich des offenen Endes 19 des herzustellenden Kombi-Verpackungsbehälters 2 einen Knick 49 auf.

Die zwischen dem Absatz 15 zur Ausbildung der Einschnürung 30 und dem herzustellenden offenen Ende 19 des Kombi-Verpackungsbehälters 2 verlaufende Formwand 7 weist somit im Bereich zwischen dem Knick 49 und dem herzustellenden offenen Ende 19 einen ersten Formwandabschnitt 50 auf. Ein weiterer Formwandabschnitt 51 ist zwischen dem Knick 49 und dem herzustellenden Boden 18 bzw. dem dort angeordneten bzw. ausgebildeten Absatz 15 ausgebildet.

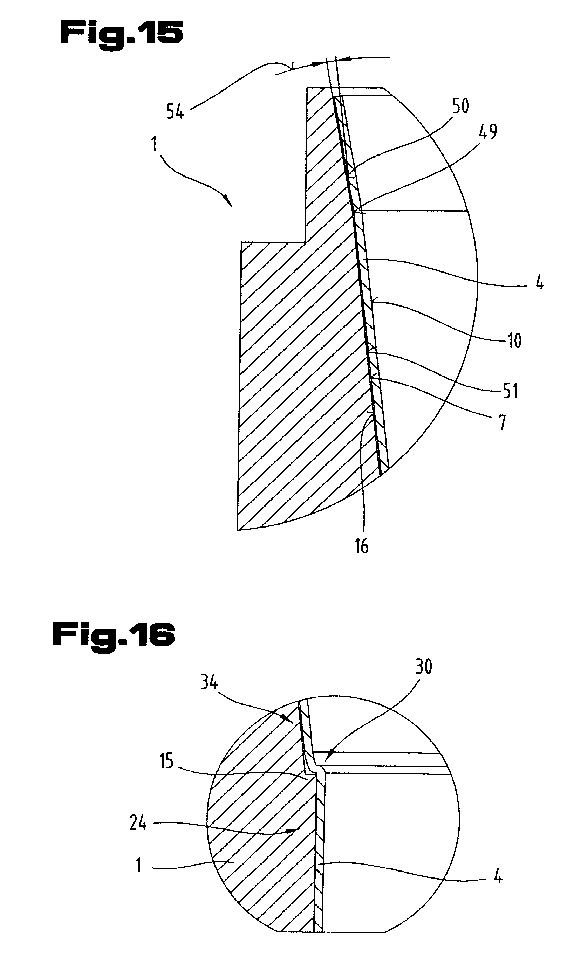

Wie nun am besten aus der Fig. 14 und 15 zu ersehen ist, wird im Axialschnitt gesehen zwischen dem ersten Formwandabschnitt 50 und der Längsachse 9 ein erster Neigungswinkel 52 eingeschlossen, welcher größer ist als ein zwischen dem weiteren Formwandabschnitt 51 und der Längsachse 9 eingeschlossener weiterer Neigungswinkel 53. Ein Differenzwinkel 54 zwischen dem größeren ersten Neigungswinkel 52 und dem kleineren Neigungswinkel 53 der beiden Formwandabschnitte 50, 51 stellt auch ein Ausmaß der Einschnürung 48 dar. Dabei kann die Einschnürung 48 auch als Abweichung von einer gedachten Geraden zwischen den beiden voneinander in Axialrichtung distanzierten Enden der Formwandabschnitte 50, 51 betrachtet werden.

Die Ausbildung und Anordnung der ersten Einschnürung 30 kann analog erfolgen, wie dies bereits zuvor detailliert beschrieben worden ist. Der in der Tiefziehform 1 ausgebildete Absatz 15 zur Ausbildung der ersten Einschnürung 30 zwischen den beiden Wandabschnitten 24 und 34 ist in der Fig. 16 vergrößert dargestellt. Dabei ist die bleibende Umformung des Außenteils 4 bedingt durch das Andrücken an den Absatz 15 zu ersehen.

Bei der Herstellung und somit der Durchführung des Verfahrens zur Herstellung des Kombi-Verpackungsbehälters 2 wird zuerst das Außenteil 4 in seiner mantelförmigen und unverformten Ausgangsraumform in die Tiefziehform 1 eingelegt und anschließend im Inline-Verfahren der Innenbehälter 3 an die Innenseite 10 des Außenteils 4 angeformt, sodass der Kombi-Verpackungsbehälter 2 hergestellt wird. So wird hier während der gemeinsamen Ausformung des Innenbehälters 2 und des manschettenförmigen Außenteils 4 im Axialschnitt gesehen im Bereich des weiteren Wandabschnittes 34 zwischen der ersten Einschnürung 30 und dem dem Flansch 20 zugewendeten Endbereich 11 des Außenteils 4 die weitere in radialer Richtung auf die Längsachse 9 hin gerichtete Einschnürung 48 eingeformt bzw. der obere Teilabschnitt des weiteren Wandabschnitts 34 in radialer Richtung bezüglich der Längsachse nach außen verformt. Wie bereits zuvor beschrieben, wird die weitere Einschnürung 48 in axialer Richtung gesehen von dem dem Flansch 20 zugewendeten Endbereich 11 des Außenteils 4 hin zum Boden 18 distanziert angeordnet. Weiters erfolgt nach der gemeinsamen Ausformung des Innenbehälters 2 und des manschettenförmigen Außenteils 4 zumindest im manschettenförmigen Außenteil 4 eine selbsttätige und nahezu vollständige Rückverformung der weiteren Einschnürung 48. Dadurch wird der weitere Wandabschnitt 34 des Außenteils 4 in diesem Bereich nahezu geradlinig ausgebildet. Diese selbsttätige Rückverformung des Werkstoffes zur Bildung des Außenteils 4 erfolgt bevorzugt während einer vorbestimmten Lagerdauer des Kombi-Verpackungsbehälters 2, in welchem auch der Schrumpfvorgang des Innenbehälters 3 stattfindet.

Durch dieses radiale Schrumpfen, insbesondere des Behältermantels 17, zwischen dem Boden 18 und dem Flansch 20 erfolgt die zuvor beschriebene minimale Distanzierung des Behältermantels 17 von der Innenseite 10 bzw. Innenfläche des Außenteils 4.

Die Ausführungsbeispiele zeigen mögliche Ausführungsvarianten des Kombi-Verpackungsbehälters 2 sowie der Tiefziehform 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Kombi-Verpackungsbehälters 2 sowie der Tiefziehform 1 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2; 3, 4; 5, 6, 7; 8; 9; 10; 11, 12 ,13; 14, 15, 16 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

| | | | |
|---|---|---|---|
| 1 | Tiefziehform | 41 | Einbuchtung |
| 2, 2' | Kombi - Verpackungsbehälter | 42 | Lasche |
| 3 | Innenbehälter | 43 | Kennlinie |
| 4 | Außenteil | 44 | Kennlinie |
| 5 | Schicht | 45 | Kennlinie |
| | | | |
| 6 | Formhohlraum | 46 | Ordinate |
| 7 | Formwand | 47 | Abszisse |
| 8 | Formstempel | 48 | Einschnürung |
| 9 | Längsachse | 49 | Knick |
| 10 | Innenseite | 50 | Formwandabschnitt |
| | | | |
| 11 | Endbereich (oben) | 51 | Formwandabschnitt |
| 12 | Endbereich (unten) | 52 | Neigungswinkel |
| 13 | Bodenbereich | 53 | Neigungswinkel |
| 14 | Behälterwand | 54 | Differenzwinkel |
| 15 | Absatz | 55 | |
| | | | |
| 16 | Außenseite | | |
| 17 | Behältermantel | | |
| 18 | Boden | | |
| 19 | Offenes Ende | | |
| 20 | Flansch | | |
| | | | |
| 21 | Aufnahmeraum | | |
| 22 | Stützmittel | | |
| 23 | Stützmittel | | |
| 24 | Wandabschnitt | | |
| 25 | Höhe | | |
| | | | |
| 26 | Distanz | | |
| 27 | Unterseite | | |
| 28 | Stirnseite | | |
| 29 | Stirnseite | | |
| 30 | Einschnürung | | |
| | | | |
| 31 | Höhe | | |
| 32 | Ausgangsstärke | | |
| 33 | Stärke | | |
| 34 | Wandabschnitt | | |
| 35 | Teilabschnitt | | |
| | | | |
| 36 | Umfalzung | | |
| 37 | Stirnende | | |
| 38 | Stützbereich | | |
| 39 | Dicke | | |
| 40 | Außenfläche | | |

## Patentansprüche

1. Kombi-Verpackungsbehälter (2, 2') umfassend einen becherförmigen Innenbehälter (3) mit einem Behältermantel (17), einem Boden (18) und mit einem im Bereich seines offenen Endes (19) den Behältermantel (17) nach außen überragenden Flansch (20), ein den Innenbehälter (3) an seinem Behältermantel (17) umgebendes manschettenförmiges Außenteil (4) mit in Richtung einer Längsachse (9) voneinander distanzierten Endbereichen (11, 12), wobei der Behältermantel (17) und das manschettenförmige Außenteil (4) eine Behälterwand (14) bilden, sowie zusammenwirkende Stützmittel (22, 23) zum Ineinanderstapeln von mehreren gleichartigen Kombi-Verpackungsbehältern (2, 2'), wobei eine dem Flansch (20) zugewendete Stirnseite (28) des Außenteils (4) unmittelbar benachbart zu einer der dem Boden (18) des Innenbehälters (3) zugewendeten Unterseite (27) des Flansches (20) angeordnet ist oder an dieser anliegt und das manschettenförmige Außenteil (4) zwischen seinen in Richtung der Längsachse (9) voneinander distanzierten Endbereichen (11, 12) mit Ausnahme seines Verbindungsbereiches im Überlappungsbereich einlagig ausgebildet ist, wobei der Kombi-Verpackungsbehälter (2, 2') in einem Abschnitt der Behälterwand (14) des Bodenbereichs (13) zumindest eine in Richtung auf die Längsachse (9) vorragende Einschnürung (30) aufweist,
und wobei der Innenbehälter (3), insbesondere dessen Behältermantel (17), an einer Innenseite (10) des manschettenförmigen Außenteils (4) teilweise anliegend angeformt ist, **dadurch gekennzeichnet, dass** die Einschnürung (30) sowohl am Außenteil (4) als auch am Behältermantel (17) ausgebildet ist und die Einschnürung (30) einen Knick in der Behälterwand (14) ausbildet, mit welchem die Behälterwand (14) in Richtung auf die Längsachse (9) hin versetzt ist, und dass die Einschnürung (30) eines der Stützmittel (22, 23) bildet und sich zwischen der Einschnürung (30) und den beiden Endbereichen (11, 12) jeweils ein erster sowie weiterer Wandabschnitt (24, 34) ausbildet.

2. Kombi-Verpackungsbehälter (2, 2') nach Anspruch 1, **dadurch gekennzeichnet, dass** eine dem Flansch (20) gegenüberliegende Stirnseite (29) des Außenteils (4) eine Aufstandsfläche für den Kombi-Verpackungsbehälter (2, 2') bildet.

3. Kombi-Verpackungsbehälter (2, 2') nach Anspruch 1 oder 2, **dadurch gekennzeichnet, dass** die in Richtung auf die Längsachse (9) vorragende Einschnürung (30) stufenförmig ausgebildet ist.

4. Kombi-Verpackungsbehälter (2, 2') nach einem der Ansprüche 1 bis 3, **dadurch** gekennzeichnet, **dass** die Einschnürung (30) des Behältermantels (17) eine Höhe (31) in radialer Richtung bezüglich der Längsachse (9) aufweist, welche größer ist als eine unverformte Ausgangsstärke (32) des Außenteils (4).

5. Kombi-Verpackungsbehälter (2, 2') nach einem der Ansprüche 1 bis 4, **dadurch** gekennzeichnet, **dass** der erste Wandabschnitt (24) des Außenteils (4) zwischen der Einschnürung (30) und dem dem Boden (18) zugewendeten Endbereich (12) in seiner Stärke (33) in radialer Richtung bezogen auf die Längsachse (9) um ein Ausmaß in einer unteren Grenze von 2 % und einer oberen Grenze von 20 % bezüglich seiner unverformten Ausgangsstärke (32) reduziert ist.

6. Kombi-Verpackungsbehälter (2, 2') nach einem der vorhergehenden Ansprüche,
**dadurch gekennzeichnet, dass** im Axialschnitt gesehen der weitere Wandabschnitt (34) des Außenteils (4) zwischen der Einschnürung (30) und dem dem Flansch (20) zugewendeten Endbereich (11) durchlaufend geradlinig ausgebildet ist.

7. Kombi-Verpackungsbehälter (2, 2') nach einem der vorhergehenden Ansprüche,
**dadurch gekennzeichnet, dass** der weitere Wandabschnitt (34) des Außenteils (4) zwischen der Einschnürung (30) und dem dem Flansch (20) zugewendeten Endbereich (11) ausgehend vom Flansch (20) hin in Richtung auf den Boden (18) konisch verjüngend ausgebildet ist.

8. Kombi-Verpackungsbehälter (2, 2') nach einem der vorhergehenden Ansprüche,
**dadurch gekennzeichnet, dass** im Axialschnitt gesehen der erste Wandabschnitt (24) des Außenteils (4) zwischen der Einschnürung (30) und dem dem Boden (18) zugewendeten Endbereich (12) durchlaufend geradlinig ausgebildet ist.

9. Kombi-Verpackungsbehälter (2, 2') nach einem der vorhergehenden Ansprüche,
**dadurch gekennzeichnet, dass** der erste Wandabschnitt (24) des Außenteils (4) zwischen der Einschnürung (30) und dem dem Boden (18) zugewendeten Endbereich (12) bezüglich des weiteren Wandabschnitts (34) des Außenteils (4) mit einer dazu geringeren Verjüngung ausgebildet ist.

10. Kombi-Verpackungsbehälter (2, 2') nach einem der vorhergehenden Ansprüche,
**dadurch gekennzeichnet, dass** der erste Wandabschnitt (24) des Außenteils (4) zwischen der Einschnürung (30) und dem dem Boden (18) zugewendeten Endbereich (12) bezüglich der Längsachse (9) parallel verlaufend ausgerichtet ist.

11. Kombi-Verpackungsbehälter (2, 2') nach einem der Ansprüche 1 bis 9, **dadurch** gekennzeichnet, **dass** der erste Wandabschnitt (24) des Außenteils (4) zwischen der Einschnürung (30) und dem dem Boden (18) zugewendeten Endbereich (12) hin in Richtung auf den Boden (18) konisch erweiternd ausgebildet ist.

12. Kombi-Verpackungsbehälter (2, 2') nach einem der Ansprüche 1 bis 11, **dadurch** gekennzeichnet, **dass** eine dem Boden (18) zugewendete Stirnseite (29) des Außenteils (4) das weitere Stützmittel (23) ausbildet.

13. Kombi-Verpackungsbehälter (2, 2') nach einem der Ansprüche 1 bis 5, **dadurch** gekennzeichnet, **dass** im Bereich des weiteren Wandabschnitts (34) zwischen der Einschnürung (30) und dem dem Flansch (20) zugewendeten Endbereich (11) des Außenteils (4) eine weitere in radialer Richtung auf die Längsachse (9) hin gerichtete Einschnürung (48) ausgebildet ist.

14. Kombi-Verpackungsbehälter (2, 2') nach Anspruch 13, **dadurch gekennzeichnet, dass** die weitere Einschnürung (48) in axialer Richtung von dem dem Flansch (20) zugewendeten Endbereich (11) des Außenteils (4) hin zum Boden (18) distanziert angeordnet ist.

15. Kombi-Verpackungsbehälter (2, 2') nach Anspruch 13 oder 14, **dadurch** gekennzeichnet, **dass** das Ausmaß der weiteren Einschnürung (48) im Behältermantel (17) des Innenbehälters (3) größer ist als das Ausmaß der weiteren Einschnürung (48) im Außenteil (4).

## Claims

1. Combination packaging container (2, 2') comprising a beaker-shaped inner container (3) with a container jacket (17), a base (18) and a flange (20) projecting out from the container jacket (17) in the region of the open end (19) of the inner container (3), a sleeve-shaped outer part (4) surrounding the inner container (3) at its container jacket (17) with end regions (11, 12) spaced apart from one another in the direction of a longitudinal axis (9), the container jacket (17) and the sleeve-shaped outer part (4) forming a container wall (14), as well as with co-operating supporting means (22, 23) to enable several combination packaging containers (2, 2') of the same type to be stacked one inside the other, and an end face (28) of the sleeve-shaped outer part (4) facing the flange (20) is disposed immediately adjacent to a bottom face (27) of the flange (20) facing the base (18) of the inner container (3) or lies against the bottom face (27) of the flange (20), and the sleeve-shaped outer part (4) is of a single-layered design between its end regions (11, 12) spaced apart from one another in the direction of the longitudinal axis (9) with the exception of a joining zone in an overlap region, the combination packaging container (2, 2') having at least one pinched region (30) projecting in the direction towards the longitudinal axis (9) in a portion of the container wall (14) of the base region (13), and the inner container (3), in particular its container jacket (17), is molded lying partially against an internal face (10) of the sleeve-shaped outer part (4), **characterized in that** the pinched region (30) is formed in both the sleeve-shaped outer part (4) and in the container jacket (17), and the pinched region (30) forms a kink in the container wall (14), by means of which kink the container wall (14) is offset in the direction towards the longitudinal axis (9), and that the pinched region (30) constitutes one of the supporting means (22, 23) and a first and another wall portion (24, 34) is respectively formed between the pinched region (30) and the two end regions (11, 12).

2. Combination packaging container (2, 2') according to claim 1, **characterized in that** an end face (29) of the outer part (4) lying opposite the flange (20) constitutes a standing surface for the combination packaging container (2, 2').

3. Combination packaging container (2, 2') according to claim 1 or 2, **characterized in that** the pinched region (30) is based on a step-shaped design projecting in the direction towards the longitudinal axis (9).

4. Combination packaging container (2, 2') according to one of claims 1 to 3, **characterized in that** the pinched region (30) of the container jacket (17) has a height (31) in the radial direction, by reference to the longitudinal axis (9), which is longer than an unformed initial thickness (32) of the outer part (4).

5. Combination packaging container (2, 2') according to one of claims 1 to 4, **characterized in that** the thickness (33) of the first wall portion (24) of the outer part (4) between the pinched region (30) and the end region (12) facing the base (18) is reduced in the radial direction, by reference to the longitudinal axis (9), by an amount with a lower limit of 2 % and an upper limit of 20 % compared with its unformed initial thickness (32).

6. Combination packaging container (2, 2') according to one of the preceding claims, **characterized in that** the other wall portion (34) of the outer part (4) extends continuously in a straight line between the pinched region (30) and the end region (11) facing the flange (20) as viewed in axial section.

7. Combination packaging container (2, 2') according to one of the preceding claims, **characterized in that** the other wall portion (34) of the outer part (4) is conical between the pinched region (30) and the end region (11) facing the flange (20), tapering from the flange (20) in the direction towards the base (18).

8. Combination packaging container (2, 2') according to one of the preceding claims, **characterized in that** the first wall portion (24) of the outer part (4) extends in a continuous straight line between the pinched region (30) and the end region (12) facing the base (18) as viewed in axial section.

9. Combination packaging container (2, 2') according to one of the preceding claims, **characterized in that** the first wall portion (24) of the outer part (4) has a less pronounced taper between the pinched region (30) and the end region (12) facing the base (18) than the other wall portion (34) of the sleeve-shaped outer part (4).

10. Combination packaging container (2, 2') according to one of the preceding claims, **characterized in that** the first wall portion (24) of the outer part (4) extends parallel with the longitudinal axis (9) between the pinched region (30) and the end region (12) facing the base (18).

11. Combination packaging container (2, 2') according to one of claims 1 to 9, **characterized in that** the first wall portion (24) of the outer part (4) is conical between the pinched region (30) and the end region (12) facing the base (18), becoming wider in the direction towards the base (18).

12. Combination packaging container (2, 2') according to one of claims 1 to 11, **characterized in that** an end face (29) of the outer part (4) facing the base (18) constitutes the other supporting means (23).

13. Combination packaging container (2, 2') according to one of claims 1 to 5, **characterized in that** another pinched region (48) directed in the radial direction towards the longitudinal axis (9) is provided in the region of the other wall portion (34) between the pinched region (30) and the end region (11) of the outer part (4) facing the flange (20).

14. Combination packaging container (2, 2') according to claim 13, **characterized in that** the other pinched region (48) is spaced at a distance apart from the end region (11) of the outer part (4) facing the flange (20) in the axial direction towards the base (18).

15. Combination packaging container (2, 2') according to claim 13 or 14, **characterized in that** the dimension of the other pinched region (48) in the container jacket (17) of the inner container (3) is bigger than the dimension of the other pinched region (48) in the outer part (4).

## Revendications

1. Récipient d'emballage combiné (2, 2') comprenant un récipient interne en forme de godet (3) avec un revêtement (17), un fond (18) et avec une bride (20) dépassant du revêtement de récipient (17) vers l'extérieur au niveau de son extrémité ouverte (19), une partie externe (4) en forme de manchette entourant le récipient interne (3) au niveau de son revêtement (17), avec des zones d'extrémités (11, 12) éloignées l'une de l'autre dans la direction d'un axe longitudinal (9), le revêtement (17) et la partie externe en forme de manchette (4) formant une paroi de récipient (14) ainsi que des moyens d'appui (22, 23) en interaction pour l'empilement les uns dans les autres de plusieurs récipients d'emballage combinés (2, 2') de même type, un côté frontal (28) de la partie externe (4), orientée vers la bride (20), étant directement adjacente à un côté inférieur (27) de la bride (20), orientée vers le fond (18) du récipient interne (3) ou s'appuyant sur celui-ci et la partie externe en forme de manchette (4) étant conçue avec une seule couche entre ses zones d'extrémités (11, 12) éloignées l'une de l'autre en direction de l'axe longitudinal (9), à l'exception de sa zone de liaison dans la zone de superposition, le récipient d'emballage combiné (2, 2') comprenant, dans une portion de la paroi de récipient (14) de la zone de fond (13), au moins un rétrécissement (30) en saillie en direction de l'axe longitudinal (9) et le récipient interne (3), plus particulièrement son revêtement (17), est formé, au niveau d'un côté interne (10) de la partie externe en forme de manchette (4), de manière partiellement en appui, **caractérisé en ce que** le rétrécissement (30) est disposé aussi bien sur la partie externe (4) que sur le revêtement (17) et le rétrécissement (30) forme un plis dans la paroi du récipient (14), avec lequel la paroi du récipient (14) est décalé en direction de l'axe longitudinal et **en ce que** le rétrécissement (30) forme un des moyens d'appui (22, 23) et, entre le rétrécissement (30) et les deux zones d'extrémité (11, 12), une première ainsi qu'une autre portion de paroi (24, 34) se forme.

2. Récipient d'emballage combiné (2, 2') selon la revendication 1, **caractérisé en ce qu'**un côté frontal (29) de la partie externe (4), située en face de la bride (20), forme une surface de contact pour le récipient d'emballage combiné (2, 2').

3. Récipient d'emballage combiné (2, 2') selon la revendication 1 ou 2, **caractérisé en ce que** le rétrécissement (30) dépassant dans la direction de l'axe longitudinal (9) est conçu de manière échelonnée.

4. Récipient d'emballage combiné (2, 2') selon l'une des revendications 1 à 3, **caractérisé en ce que** le rétrécissement (30) du revêtement (17) présente une hauteur (31) dans la direction radiale par rapport à l'axe longitudinale (9) qui est supérieure à une épaisseur initiale non déformée (32) de la partie externe (4).

5. Récipient d'emballage combiné (2, 2') selon l'une des revendications 1 à 4, **caractérisé en ce que** la première portion de paroi (24) de la partie externe (4) est réduite, entre le rétrécissement (30) et la zone d'extrémité (12) orientée vers le fond (18), dans son épaisseur (33) dans la direction radiale par rapport à l'axe longitudinal (9) d'une valeur, en limite inférieure, de 2% et en limite supérieure de 20% par rapport à son épaisseur initiale non déformée (32).

6. Récipient d'emballage combiné (2, 2') selon l'une des revendications précédentes, **caractérisé en ce que**, vue en coupe axiale, l'autre portion de paroi (34) de la partie externe (4) est conçue de manière linéaire et continue entre le rétrécissement (30) et la zone d'extrémité (11) orientée vers la bride (20).

7. Récipient d'emballage combiné (2, 2') selon l'une des revendications précédentes, **caractérisé en ce que** l'autre portion de paroi (34) de la partie externe (4) est conçue, entre le rétrécissement (30) et la zone d'extrémité (11) orientée vers la bride (20) est conçue de manière conique et se rétrécit à partir de la bride (20) en direction du fond (18).

8. Récipient d'emballage combiné (2, 2') selon l'une des revendications précédentes, **caractérisé en ce que**, vue en coupe axiale, la première portion de paroi (24) de la partie externe (4) est conçue de manière linéaire et continue entre le rétrécissement (30) et la zone d'extrémité (12) orientée vers le fond (18).

9. Récipient d'emballage combiné (2, 2') selon l'une des revendications précédentes, **caractérisé en ce que** la première portion de paroi (24) de la partie externe (4) est conçue, entre le rétrécissement (30) et la zone d'extrémité (12) orientée vers le fond (18), avec un rétrécissement plus faible par rapport à l'autre portion de paroi (34) de la partie externe (4).

10. Récipient d'emballage combiné (2, 2') selon l'une des revendications précédentes, **caractérisé en ce que** la première portion de paroi (24) de la partie externe (4) est conçue, entre le rétrécissement (30) et la zone d'extrémité (12) orientée vers le fond (18), de manière parallèle à l'axe longitudinal (9).

11. Récipient d'emballage combiné (2, 2') selon l'une des revendications 1 à 9, **caractérisé en ce que** la première portion de paroi (24) de la partie externe (4) est conçue, entre le rétrécissement (30) et la zone d'extrémité (12) orientée vers le fond (18), avec un élargissement conique en direction du fond (18).

12. Récipient d'emballage combiné (2, 2') selon l'une des revendications 1 à 11, **caractérisé en ce qu'**un côté frontal (29) de la partie externe (4), orientée vers le fond (18), forme l'autre moyen d'appui (23).

13. Récipient d'emballage combiné (2, 2') selon l'une des revendications 1 à 5, **caractérisé en ce que**, au niveau de l'autre portion de paroi (34), entre le rétrécissement (30) et la zone d'extrémité (11) de la partie externe (4) de la bride (20), un autre rétrécissement (48), orienté dans la direction radiale vers l'axe longitudinal (9), est réalisé.

14. Récipient d'emballage combiné (2, 2') selon la revendication 13, **caractérisé en ce que** l'autre rétrécissement (48) est disposé dans la direction axiale, de la zone d'extrémité (11) de la partie externe (4) orientée vers la bride (20) en direction du fond (18).

15. Récipient d'emballage combiné (2, 2') selon la revendication 13 ou 14, **caractérisé en ce que** l'étendue de l'autre rétrécissement (48) dans le revêtement (17) du récipient interne (3) est supérieure à l'étendue de l'autre rétrécissement (48) dans la partie externe (4).
